(19) Europäisches Patentamt
European Patent Office
Office européen des brevets

(11) EP 1 105 840 B1

(12) EUROPEAN PATENT SPECIFICATION

(45) Date of publication and mention of the grant of the patent: **20.11.2002 Bulletin 2002/47**

(21) Application number: **99903674.2**

(22) Date of filing: **25.01.1999**

(51) Int Cl.$^7$: **G06T 7/00**, G06K 9/46

(86) International application number: **PCT/EP99/00425**

(87) International publication number: **WO 00/011609 (02.03.2000 Gazette 2000/09)**

# (54) IMAGE PROCESSING APPARATUS AND METHOD

GERÄT UND VERFAHREN ZUR BILDVERARBEITUNG

APPAREIL ET PROCEDE POUR LE TRAITEMENT D'IMAGES

(84) Designated Contracting States:
**AT BE CH CY DE DK ES FI FR GB GR IE IT LI LU MC NL PT SE**

(30) Priority: **25.08.1998 WOPCT/EP98/05383**

(43) Date of publication of application: **13.06.2001 Bulletin 2001/24**

(73) Proprietors:
- **Holding B.E.V. S.A.**
  **2953 Luxembourg (LU)**
- **Pirim, Patrick**
  **75013 Paris (FR)**
- **Binford, Thomas**
  **Cupertino, CA 95014 (US)**

(72) Inventors:
- **PIRIM, Patrick**
  **F-75013 Paris (FR)**
- **BINFORD, Thomas**
  **Cupertino, CA 95014 (US)**

(74) Representative: **Catherine, Alain et al**
**Cabinet Harlé & Phélip**
**7, rue de Madrid**
**75008 Paris (FR)**

(56) References cited:
**EP-A- 0 380 659** **EP-A- 0 394 959**

- **YAMADA K ET AL: "IMAGE UNDERSTANDING BASED ON EDGE HISTOGRAM METHOD FOR REAR-END COLLISION AVOIDANCE SYSTEM" PROCEEDINGS OF THE VEHICLE NAVIGATION AND INFORMATION SYSTEMS CONFERENCE, YOKOHAMA, AUG. 31 - SEPT. 2, 1994,31 August 1994, pages 445-450, XP000641348 INSTITUTE OF ELECTRICAL AND ELECTRONICS ENGINEERS**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 105 840 B1

Printed by Jouve, 75001 PARIS (FR)

## Description

### BACKGROUND OF THE INVENTION

1. Filed of the invention

The present invention relates generally to a generic image processing system, and more particularly to an interface between an image processing and a controller, and to the use of said image processing system to detect the orientation of a line, to detect lines and lanes of a road, and to detect vehicles on a road.

2. Description of the Related Art

A process for identifying a line in an input image field is known from EP-A-0.380.659 and YAMADA K et al.: « Image understanding based on edge histogram method for rear-end collision avoidance system »' proc. of the vehicle navigation and information systems conference, Yokohama, Aug. 31-Sept. 2, 1994-450, IEEE, is disclosing an application to such process.

Moreover, Commonly-owned PCT application Serial Nos WO 98/05002 and WO 00/11610 disclose a generic image processing system that operates to localize objects In relative movement in an image and to determine the speed and direction of the objects in real-time. Each pixel of an image is smoothed using its own time constant. A binary value corresponding to the existence of a significant variation in the amplitude of the smoothed pixel from the prior frame, and the amplitude of the variation, are determined, and the time constant for the pixel is updated. For each particular pixel, two matrices are formed that include a subset of the pixels spatially related to the particular pixel. The first matrix contains the binary values of the subset of pixels. The second matrix contains the amplitude of the variation of the subset of pixels. In the first matrix, it is determined whether the pixels along an oriented direction relative to the particular pixel have binary values representative of significant variation, and, for such pixels, it is determined in the second matrix whether the amplitude pixels varies in a known manner indicated movement in the oriented direction. In domains that include luminance, hue, saturation, speed, oriented direction, time constant, and x and y position, a histogram is formed of the values in the first and second matrices falling in user selected combinations of such domains. Using the histograms, it is determined whether there is an area having the characteristics of the selected combinations of domains.

It would be desirable to apply such a generic image processing system to detect various criteria useful in an automatic cruise control system, including detection of lines on a road, detection of lanes on a road, and detection of vehicular traffic in adjacent lanes.

### SUMMARY OF THE INVENTION

The present invention as claimed in claim 1 is a process for identifying the orientation of a line in an input image, in which the line comprises a plurality of pixels. In the process, a histogram is formed of the pixels projected onto multiple axes. Process until the histograms include characteristics indicating that the line is most closely perpendicular to one of the multiples axes. The histograms characteristics perferably include R = NBPS/RMAX, and the line is determined to be most closely perpendicular to one of the multiple axes at which R is a minimum.

As non-limitative examples of multiple axes, 16 axes over 180° are used, the minimum angle being between two axes thus 11,25. It is also possible to use two axes which are perpendicular. Even if multiple axes are used, it is also possible to further process by rotating those multiple axes until one of the multiple axes is most closely perpendicular to the line.

In a process of detecting a line on a road from a vehicle-mounted camera, an image is acquired of the road, with the image including pixels corresponding to the line. Pixels of the image having characteristics corresponding to characteristics of the line are selected and histograms are formed of the selected pixels projected onto multiple axes. The histogram is then analysed to identify the characteristics indicative of a line. Process until one of the histograms includes characteristics indicative of a line. The step of selecting pixels of the image having characteristics corresponding to characteristics of a line preferably involves selecting pixels from the group consisting of luminance, hue, saturation, direction, DP, CO and velocity. Alternatively, the step of selecting pixels having characteristics corresponding to characteristics of a line involves selecting pixels in a desired area of the image, possible having a desired orientation in the image. If desired, the process of rotating the multiple axes is repeated and forming histograms of the selected pixels until one of the histograms inlcudes characteristics indicating that the line is most closely perpendicular to one of the multiple axes.

The process is done using parallel computation.

In one embodiment, the line is a double line and the step of selecting pixels of the image having characteristics corresponding to characteristics of the line involves selecting first pixels in a first desired area of the image at a first desired orientation in the image for selecting pixels associated with the first line, and selecting pixels in a second desired area of the image at a second desired orientation in the image for selecting pixels associated with the second line. In this embodiment, the step of forming a histogram of the selected pixels projected onto a first axis involves forming a first histogram of the selected first pixels projected onto a first axis and forming a second histogram of the selected second pixels projected onto the first axis, and the step of analyzing the histogram to identify characteristics indicative of a line includes analyzing each of the first and second histograms to identify characteristics indicative of a line. Finally, the step of rotating the first axis includes rotating the first axis and forming first and second histograms of the selected first and second pixels respectively projected onto the rotated first axis until each of the first and second histograms comprises characteristics indicative of a line. If desired, the step of rotating the first axis and forming first and second histogram may be repeated until each of the first and second histograms comprises characteristics indicative of a line and until at least one of the first and second histograms comprises characteristics indicating that the line associated with such histogram is most closely perpendicular to the rotated first axis. The double lines are preferably parallel to the other and each line may be a solid or broken line.

In an alternative embodiment, the line is a parallel double line and the step of analyzing the histogram to identify characteristics indicative of a line includes analyzing the histogram to identify two peaks characteristic of a parallel double line.

In one embodiment, in which the line is a broken line, the step of analyzing the histogram to identify characteristics indicative of a line involves time averaging the histogram over a succession of frames of the image. In an alternative embodiment in which the line is a broken line, the step of analyzing the histogram to identify characteristics indicative of a line involves analyzing the histogram over a succession of frames of the image to identify a periodic fluctuation in peaks of the histogram indicative of a broken line. In a further alternative embodiment in which the line is a broken line, the step of selecting pixels of the image having characteristics corresponding to characteristics of the line involves selecting first pixels in a first desired area of the image for selecting pixels associated with a first portion of the broken line, and selecting pixels in a second desired area of the image for selecting pixels associated with a second portion of the broken line adjacent to the first section. In this embodiment, the step of forming a histogram of the selected pixels projected onto a first axis involves forming a first histogram of the selected first pixels projected onto a first axis and forming a second histogram of the selected second pixels projected onto the first axis. Finally, the step of analyzing the histogram to identify characteristics indicative of a line comprises analyzing the first and second histograms over a succession of frames of the image to identify a periodic movement of the first pixels associated with the line from the first desired area to the second desired area. If desired, the step of rotating the first axis and forming first and second histograms may be repeated until each of the first and second histograms includes characteristics indicative of a line and until at least one of the first and second histograms includes characteristics indicating that the line associated with such histogram is most closely perpendicular to the rotated first axis.

In a process of detecting a lane on a road from a vehicle-mounted camera, in which the lane is defined by a first line on one side thereof and a second line on the other side thereof, an image of the road is acquired from the camera, with the image including a plurality of pixels corresponding to each of the first and second lines. Pixels of the image in a first desired area of the image at a first desired orientation in the image are selected for selecting pixels associated with the first line, and pixels in a second desired area of the image at a second desired orientation in the image are selected for selecting pixels associated with the second line. A first histogram is formed of the selected first pixels projected onto a first axis and a second histogram is formed of the selected second pixels projected onto a second axis. Each of the first and second histograms is analyzed to identify characteristics in each histogram indicative of a line. Finally, until the first histogram includes characteristics indicative of a line, the first axis is rotated and a first histogram is formed of the first pixels projected onto the rotated first axis, and until the second histogram includes characteristics indicative of a line, the second axis is rotated and a second histogram is formed of the second pixels projected onto the rotated second axis. If desired, the steps of rotating the first axis and forming a first histogram and of rotating the second axis and forming a second histogram are repeated until each of the first and second histograms includes characteristics indicative of a line and until at least one of the first and second histograms includes characteristics indicating that the line associated with such histogram is most closely perpendicular to the rotated first axis.

In a process of detecting a vehicle in an adjacent lane from a camera mounted to a subject vehicle, an image of the adjacent lane is acquired. Pixels of the image having characteristics corresponding to characteristics of a vehicle are then selected. A histogram is formed of the selected pixels projected onto a first axis. Finally, the histogram is analyzed to detect characteristics indicative of a vehicle. In such a process wherein the adjacent lane is defined by first and second side lines, the side lines may be identified using the process indicated above. Pixels of the image having characteristics corresponding to characteristics of a vehicle are then selected in an area bounded by the first and second side lines. If identifying taillights, the step of selecting pixels of the image having characteristics corresponding to characteristics of a vehicle may be accomplished by selecting pixels having a color or luminance characteristic of taillights. If desired, the histogram may be analyzed to separately detect each taillight. If identifying headlights, the step of selecting pixels of the image having characteristics corresponding to characteristics of a vehicle may be accomplished by selecting pixels having a color or luminance characteristic of headlights. The step of selecting pixels of the image having characteristics corresponding to characteristics of a vehicle may also involve selecting pixels moving in a direction parallel to a direction of the lane or selecting pixels moving in a direction generally parallel to one of the first or second side lines. The step of analyzing the histogram to detect characteristics indicative of a vehicle may comprise detecting a histogram having a minimum number of points.

An apparatus as claimed in claim 26 for identifying the orientation of a line in an input image includes a histogram formation unit for forming a histogram of the pixels projected onto multiple axes, and a controller for rotating the axes. The histogram formation unit forms a histogram of the pixels projected onto the rotated axes, and the controller analyzes the histogram to determine when the histograms include characteristics indicating that the line is most closely perpendicular to one of the multiple axes. The histogram formation unit preferably includes a Hough transform unit for performing a Hough transform on the pixels for thereby enabling rotation of the axes. The histogram formation unit computes R =NBPTS/RMAX (as defined below), and the controller determines the rotated axis at which R is a minimum to identify the line most closely perpendicular to one of the rotated axes.

An apparatus for detecting a line on a road includes a vehicle-mounted camera acquiring an image of the road, a controller, and a histogram formation unit for forming a histogram on pixels having selected characteristics on a selected axis. The controller controls the histogram formation unit to select pixels of the image having characteristics corresponding to characteristics of a line and to form a histogram projected onto a first axis. The controller analyzes the histogram to identify characteristics indicative of a line. The controller further rotates the first axis and controls the histogram formation unit to form a histogram projected onto the rotated first axis. The controller analyzes the histogram of each rotated axis until the histogram comprises characteristics indicative of a line. The controller preferably rotates the first axis until the controller determines that the histogram comprises characteristics indicating that the line is most closely perpendicular to the rotated first axis. The histogram formation unit preferably computes R =NBPTS/RMAX, and the controller determines the rotated first axis at which R is a minimum to identify the line most closely perpendicular to the rotated first axis. The selected pixel characteristics are preferably selected from the group consisting of luminance, hue, saturation, direction, DP, CO and velocity.

If desired, the histogram formation unit includes an area selection memory for selecting an area of an image for which to form a histogram. The controller controls the histogram formation unit to select pixels in a desired area of the image for detecting the line. The histogram formation unit may also include an angle selection memory for selecting an orientation angle for forming a histogram. The controller controls the histogram formation unit to select pixels in a desired area of the image and to form a histogram at a desired orientation angle for detecting the line.

In one embodiment, the line is a double line and the controller controls the histogram formation unit to select pixels of the image having characteristics corresponding to characteristics of a line in a first desired area of the image at a first desired orientation in the image for selecting pixels associated with a first line of the double line, and controls the histogram formation unit to select pixels in a second desired area of the image at a second desired orientation in the image for selecting pixels associated with the second line. The histogram formation unit forms a first histogram of the selected first pixels projected onto the first axis and forms a second histogram of the selected second pixels projected onto the first axis. The controller analyzes each of the first and second histograms to identify characteristics indicative of a line and rotates the first axis until each of the first and second histograms comprises characteristics indicative of a line. The controller may further rotate the first axis until each of the first and second histograms comprises characteristics indicative of a line and until at least one of the first and second histograms comprises characteristics indicating that the line associated with such histogram is most closely perpendicular to the rotated first axis.

In an alternative embodiment in which the line is a parallel double line, the controller analyzes the histogram to identify two peaks in the histogram characteristic of a parallel double line. In an embodiment in which the line is a broken line, the controller time averages the histogram over a succession of frames of the image to identify characteristics indicative of a broken line. In an alternative embodiment in which the line is a broken line, the controller time analyzes the histogram over a succession of frames of the image to identify a periodic fluctuation in peaks of the histogram indicative of a broken line. In a still further alternative embodiment in which the line is a broken line, the controller controls the histogram formation unit to form a first histogram of first pixels in a first desired area of the image associated with a first portion of the broken line, and to form a second histogram of second pixels in a second desired area of the image associated with a second portion of the broken line adjacent to the first section, with each of the first and second histograms being projected onto the first axis. The controller analyzes the first and second histograms over a succession of frames of the image to identify a periodic movement of first pixels associated with the line from the first desired area to the second desired area.

An apparatus for detecting a lane on a road in which the lane is defined by a first line on one side of the road and a second line on the other side of the road includes a vehicle-mounted camera for acquiring an image of the road, a controller, and a histogram formation unit for selecting pixels in an image having particular characteristics and for forming a histogram of the selected pixels. The controller controls the histogram formation unit for selecting pixels of the image in a first desired area of the image and for forming a histogram of the selected pixels in the first desired area projected onto a first axis for forming a first histogram of pixels associated with the first line, and further controls the histogram formation unit for selecting pixels in a second desired area of the image and for forming a second histogram of the selected pixels in the second desired area projected onto a second axis for forming a histogram of pixels associated with the second line. The controller analyzes each of the first and second histograms to identify characteristics in each histogram indicative of a line. Finally, the controller rotates the first axis until the first histogram comprises characteristics indicative of a line, and rotates the second axis until the second histogram comprises characteristics indicative of a line. If desired, the controller further rotates the first axis and the second axis until each of the first and second histograms comprises characteristics indicative of a line and until at least one of the first and second histograms comprises characteristics indicating that the line associated with such histogram is most closely perpendicular to the rotated first axis.

An apparatus for detecting a vehicle in an adjacent lane from a subject vehicle includes a camera mounted to the subject vehicle for acquiring an image of the adjacent lane, a histogram formation unit for selecting pixels of the image and for forming a histogram of such images, and a controller for controlling the histogram formation unit to select pixels having characteristics corresponding to characteristics of a vehicle and for analyzing the histogram of such pixels to detect characteristics indicative of a vehicle. If the adjacent lane is defined by first and second side lines, the side lines are detected as described above, and the controller controls the histogram formation unit to select pixels of the image having characteristics corresponding to characteristics of a vehicle comprises in an area bounded by the side lines. If desired, the controller controls the histogram formation unit to select pixels i) having the color or luminance characteristics of taillights, ii) having color or luminance characteristics of headlights, ii) moving in a direction parallel to a direction of the lane, or iv) moving in a direction generally parallel to one of the side lines.

An apparatus for identifying an object in an input signal, in which the object includes pixels in one of a plurality of classes in one of a plurality of domains, includes:

a classifier for each domain, the classifier classifying pixels within each domain in selected classes within the domain;

a linear combination unit for each domain, the linear combination unit generating a validation signal for the domain, the validation signal selecting one or more of the plurality of domains for processing;

a rotation unit for enabling selection of a histogram formation axis;

a histogram formation unit for forming a histogram for pixels of the output signal within the classes selected by the classifier within each domain selected by the validation signal projected onto the histogram formation axis; and

a controller for controlling the classifier, linear combination unit, rotation unit, and histogram formation unit for identifying the object.

The rotation unit preferably enables selection of a first histogram formation axis and a second histogram formation axis, and the histogram formation unit is capable of forming a first histogram projected onto the first histogram formation axis, and of forming a second histogram projected onto the second histogram formation axis.

An alternative apparatus as claimed in claim 33 for identifying an object in an input signal includes a classifier for each domain, a linear combination unit for each domain, an area selection unit for selecting an area of the image, a histogram formation unit, and a controller.

The apparatus also preferably includes a rotation unit for enabling selection of a histogram formation axis, with the histogram formation unit forming a histogram for pixels of the output signal projected onto the histogram formation axis.

A further apparatus for identifying an object in an input signal includes a classifier, a linear combination unit, a masking unit for masking an area of the image to prevent consideration of the pixels in the masked area, a histogram formation unit, and a controller.

An interface between an image processing system and a controller comprises:

input signals from the controller to the image processing system including control signals selected from the group consisting of:

i) signals for selecting domains for processing by the image processing system,

ii) signals for selecting classes of pixels within each domain for processing by the image processing system,

iii) signals for selecting axes for formation of histograms projected on the selected axes, and

iv) signals for selecting an area of an image for processing by the image processing system; and

output signals from the image processing system to the controller including signals resultant from processing the input signals selected from the group consisting of:

i) signals containing information on histograms formed in the image processing system, and
ii) signals containing histograms formed in the image processing system.

The domains are preferably selected from the group consisting of luminance, hue, saturation, CO, DP, direction, and velocity, and the signals containing information on histograms formed in the image processing system are preferably selected from the group consisting of MIN, MAX, NBPTS, RMAX, POSRMAX.

The apparatus is built using a single chip (MOS).

The physical link of the interface is a standard automotive bus. It is possible to dynamically adapt in function of results at least one or more of the following parameters: classification, areas, histograms.

It is possible to use an interface with a physical link as summarised. It is also possible to use the process and apparatus to determine curves, said curve being segmented into sensibly linear portions.

## BRIEF DESCRIPTION OF THE DRAWINGS

Fig. 1 is a diagrammatic illustration of the system according to the invention.
Fig. 2 is a block diagram of the temporal and spatial processing units of the invention.
Fig. 3 is a block diagram of the temporal processing unit of the invention.
Fig. 4 is a block diagram of the spatial processing unit of the invention.
Fig. 5 is a diagram showing the processing of pixels in accordance with the invention.
Fig. 6 illustrates the numerical values of the Freeman code used to determine movement direction in accordance with the invention.
Fig. 7 illustrates nested matrices as processed by the temporal processing unit.
Fig. 8 illustrates hexagonal matrices as processed by the temporal processing unit.
Fig. 9 illustrates reverse-L matrices as processed by the temporal processing unit.
Fig. 10 illustrates angular sector shaped matrices as processed by the temporal processing unit.
Fig. 11 is a block diagram showing the relationship between the temporal and spatial processing units, and the histogram formation units.
Fig. 12 is a block diagram showing the interrelationship between the various histogram formation units.
Fig. 13 shows the formation of a two-dimensional histogram of a moving area from two one-dimensional histograms.
Fig. 14 is a block diagram of an individual histogram formation unit.
Figs. 15A and 15B illustrate the use of a histogram formation unit to find the orientation of a line relative to an analysis axis.
Fig. 16 illustrates a one-dimensional histogram.
Fig. 17 illustrates the use of semi-graphic sub-matrices to selected desired areas of an image.
Fig. 18 illustrates the use of the system of the invention to detect the orientation of a line on a road.
Fig. 19 is a flow diagram illustrating the use of the system of the invention to detect the orientation of a line on a road.
Fig. 20 illustrates the use of the system of the invention to detect the orientation of a broken line on a road.
Fig. 21A and 21B illustrates an alternative embodiment of the use of the system of the invention to detect the orientation of a broken line on a road.
Fig. 22 illustrates the use of the system of the invention to detect a by-passing vehicle on a road.
Fig. 23 is a flow diagram illustrating the use of the system of the invention to detect a by-passing vehicle on a road.
Fig. 24 illustrates another embodiment of the invention.
Fig. 25 illustrates the use of the system of the Invention to detect curves.

## DETAILED DESCRIPTION OF THE INVENTION

The present invention discloses a number of applications for the generic image processing system disclosed in commonly-owned PCT Application Serial Nos. WO 98/05002 and WO 00/11610. More specifically, the present invention relates to the use of a such a generic image processing system for detection of various criteria useful in an automatic vehicular control system, i.e, an automatic cruise control system, including detection of lines on a road, detection of road lanes, and detection of vehicular traffic in adjacent lanes. Also disclosed is an Interface for such a generic image processing system.

The apparatus of the invention is similar to those described in the aforementioned PCT Application Serial Nos. PCT/FR97/01354 and PCT/EP98/05383 which will be described herein for purposes of clarity. Referring to Figs. 1 and 10, the generic image processing system 22 includes a spatial and temporal processing unit 11 in combination with a histogram formation unit 22a. Spatial and temporal processing unit 11 includes an input 12 that receives a digital video signal S originating from a video camera or other imaging device 13 which monitors a scene 13a. Imaging device 13 is preferably a conventional CMOS-type CCD camera, which for purposes of the presently-described automatic cruise-control application is preferably mounted on a vehicle facing the road in front of the vehicle. It will be appreciated that the system described may be used to detect other criteria useful for automatic operation of a vehicle, or other applications, and that the camera may be mounted on the vehicle in any desired fashion to detect the specific criteria of interest, or may otherwise be appropriately mounted for the desired application. It is also foreseen that any other appropriate sensor, e.g., ultrasound, IR, Radar, etc., may be used as the imaging device. Imaging device 13 may have a direct digital output, or an analog output that is converted by an A/D convertor into digital signal S. Imaging device 13 may also be integral with generic image processing system 22, if desired.

While signal S may be a progressive signal, it is preferably composed of a succession of pairs of interlaced frames, $TR_1$ and $TR'_1$ and $TR_2$ and $TR'_2$, each consisting of a succession of horizontal scanned lines, e.g., $l_{1.1}$, $l_{1.2}$,..., $l_{1.17}$ in $TR_1$, and $_{21}$ in $TR_2$. Each line consists of a succession of pixels or image-points PI, e.g., $a_{1.1}$, $a_{1.2}$ and $a_{1.3}$ for line $l_{1.1}$; $al_{17.1}$ and $al_{17.22}$ for line $l_{1.17}$; $al_{1.1}$ and $a_{1.2}$ for line $l_{2.1}$ Signal S(PI) represents signal S composed of pixels PI.

S(PI) includes a frame synchronization signal (ST) at the beginning of each frame, a line synchronization signal (SL) at the beginning of each line, and a blanking signal (BL). Thus, S(PI) includes a succession frames, which are representative of the time domain, and within each frame, a series of lines and pixels, which are representative of the spatial domain.

In the time domain, "successive frames" shall refer to successive frames of the same type (i.e., odd frames such as $TR_1$ or even frames such as $TR'_1$), and "successive pixels in the same position" shall denote successive values of the pixels (PI) in the same location in successive frames of the same type, e.g., $a_{1.1}$ of $l_{1.1}$ in frame $TR_1$ and $a_{1.1}$ of $l_{1.1}$ in the next corresponding frame $TR_2$

Spatial and temporal processing unit 11 generates outputs ZH and SR 14 to a data bus 23 (Fig. 11), which are preferably digital signals. Complex signal ZH comprises a number of output signals generated by the system, preferably including signals indicating the existence and localization of an area or object in motion, and the speed V and the oriented direction of displacement DI of each pixel of the image. Also preferably output from the system is input digital video signal S, which is delayed (SR) to make it synchronous with the output ZH for the frame, taking into account the calculation time for the data in composite signal ZH (one frame). The delayed signal SR is used to display the image received by camera 13 on a monitor or television screen 10, which may also be used to display the information contained in composite signal ZH. Composite signal ZH may also be transmitted to a separate processing assembly 10a in which further processing of the signal may be accomplished.

Referring to Fig. 2, spatial and temporal processing unit 11 includes a first assembly 11a, which consists of a temporal processing unit 15 having an associated memory 16, a spatial processing unit 17 having a delay unit 18 and sequencing unit 19, and a pixel clock 20, which generates a clock signal HP, and which serves as a clock for temporal processing unit 15 and sequencing unit 19. Clock pulses HP are generated by clock 20 at the pixel rate of the image, which is preferably 13.5 MHZ.

Fig. 3 shows the operation of temporal processing unit 15, the function of which is to smooth the video signal and generate a number of outputs that are utilized by spatial processing unit 17. During processing, temporal processing unit 15 retrieves from memory 16 the smoothed pixel values LI of the digital video signal from the immediately prior frame, and the values of a smoothing time constant CI for each pixel. As used herein, LO and CO shall be used to denote the pixel values (L) and time constants (C) stored in memory 16 from temporal processing unit 15, and LI and CI shall denote the pixel values (L) and time constants (C) respectively for such values retrieved from memory 16 for use by temporal processing unit 15. Temporal processing unit 15 generates a binary output signal DP for each pixel, which identifies whether the pixel has undergone significant variation, and a digital signal CO, which represents the updated calculated value of time constant C.

Referring to Fig. 3, temporal processing unit 15 includes a first block 15a which receives the pixels PI of input video signal S. For each pixel PI, the temporal processing unit retrieves from memory 16 a smoothed value LI of this pixel from the immediately preceding corresponding frame, which was calculated by temporal processing unit 15 during processing of the immediately prior frame and stored in memory 16 as LO. Temporal processing unit 15 calculates the absolute value AB of the difference between each pixel value PI and LI for the same pixel position (for example $a_{1.1}$, of $l_{1.1}$ in $TR_1$ and of $l_{1.1}$ in $TR_2$:

$$AB = |PI-LI|$$

Temporal processing unit 15 is controlled by clock signal HP from clock 20 in order to maintain synchronization with the incoming pixel stream. Test block 15b of temporal processing unit 15 receives signal AB and a threshold value SE. Threshold SE may be constant, but preferably varies based upon the pixel value PI, and more preferably varies with the pixel value so as to form a gamma correction. Known means of varying SE to form a gamma correction is represented by the optional block 15e shown in dashed lines. Test block 15b compares, on a pixel-by-pixel basis, digital signals AB and SE in order to determine a binary signal DP. If AB exceeds threshold SE, which indicates that pixel value PI has undergone significant variation as compared to the smoothed value LI of the same pixel in the prior frame, DP is set to "1" for the pixel under consideration. Otherwise, DP is set to "0" for such pixel.

When DP = 1, the difference between the pixel value PI and smoothed value LI of the same pixel in the prior frame is considered too great, and temporal processing unit 15 attempts to reduce this difference in subsequent frames by reducing the smoothing time constant C for that pixel. Conversely, if DP = 0, temporal processing unit 15 attempts to increase this difference in subsequent frames by increasing the smoothing time constant C for that pixel. These adjustments to time constant C as a function of the value of DP are made by block 15e. If DP = 1, block 15c reduces the time constant by a unit value U so that the new value of the time constant CO equals the old value of the constant CI minus unit value U.

$$CO=CI-U$$

If DP = 0, block 15c increases the time constant by a unit value U so that the new value of the time constant CO equals the old value of the constant CI plus unit value U.

$$CO=CI+U$$

Thus, for each pixel, block 15c receives the binary signal DP from test unit 15b and time constant CI from memory 16, adjusts CI up or down by unit value U, and generates a new time constant CO which is stored in memory 16 to replace time constant CI.

In a preferred embodiment, time constant C, is in the form $2^p$, where p is incremented or decremented by unit value U, which preferably equals 1, in block 15c. Thus, if DP = 1, block 15c subtracts one (for the case where U=1) from p in the time constant $2^P$ which becomes $2^{P-1}$. If DP = 0, block 15c adds one to p in time constant $2^p$, which becomes $2^{P+1}$. The choice of a time constant of the form $2^p$ facilitates calculations and thus simplifies the structure of block 15c.

Block 15c includes several tests to ensure proper operation of the system. First, CO must remain within defined limits. In a preferred embodiment, CO must not become negative ($CO \geq 0$) and it must not exceed a limit N ($CO \leq N$), which is preferably seven. In the instance in which CI and CO are in the form $2^P$, the upper limit N is the maximum value for p.

The upper limit N may be constant, but is preferably variable. An optional input unit 15f includes a register or memory that enables the user, or controller 42 to vary N. The consequence of increasing N is to increase the sensitivity of the system to detecting displacement of pixels, whereas reducing N improves detection of high speeds. N may be made to depend on PI (N may vary on a pixel-by-pixel basis, if desired) in order to regulate the variation of LO as a function of the level of PI, i.e., $N_{ijt} = f(PI_{ijt})$, the calculation of which is done in block 15f, which in this case would receive the value of PI from video camera 13.

Finally, a calculation block 15d receives, for each pixel, the new time constant CO generated in block 15c, the pixel values PI of the incoming video signal S, and the smoothed pixel value LI of the pixel in the previous frame from memory 16. Calculation block 15d then calculates a new smoothed pixel value LO for the pixel as follows:

$$LO=LI + (PI - LI)/CO$$

If $CO = 2^P$, then

$$LO=LI + (PI - LI)/2^{po}$$

where "po", is the new value of p calculated in unit 15c and which replaces previous value of "pi" in memory 16.

The purpose of the smoothing operation is to normalize variations in the value of each pixel PI of the incoming video signal for reducing the variation differences. For each pixel of the frame, temporal processing unit 15 retrieves LI and CI from memory 16, and generates new values LO (new smoothed pixel value) and CO (new time constant) that are stored in memory 16 to replace LI and CI respectively. As shown in Fig. 2, temporal processing unit 15 transmits the CO and DP values for each pixel to spatial processing unit 17 through the delay unit 18.

The capacity of memory 16 assuming that there are R pixels in a frame, and therefore 2R pixels per complete image, must be at least 2R(e+f) bits, where e is the number of bits required to store a single pixel value LI (preferably eight bits), and f is the number of bits required to store a single time constant CI (preferably 3 bits). If each video image is composed of a single frame (progressive image), it is sufficient to use R(e+f) bits rather than 2R(e+f) bits.

Spatial processing unit 17 is used to identify an area in relative movement in the images from camera 13 and to determine the speed and oriented direction of the movement. Spatial processing unit 17, in conjunction with delay unit 18, cooperates with a control unit 19 that is controlled by clock 20, which generates clock pulse HP at the pixel frequency. Spatial processing unit 17 receives signals $DP_{ij}$ and $CO_{ij}$ (where i and j correspond to the x and y coordinates of the pixel) from temporal processing unit 15 and processes these signals as discussed below. Whereas temporal processing unit 15 processes pixels within each frame, spatial processing unit 17 processes groupings of pixels between the frames.

Fig. 5 diagrammatically shows the temporal processing of successive corresponding frame sequences $TR_1$, $TR_2$, $TR_3$ and the spatial processing in these frames of a pixel PI with coordinates x, y, at times $t_1$, $t_2$, and $t_3$. A plane in Fig. 5 corresponds to the spatial processing of a frame, whereas the superposition of frames corresponds to the temporal processing of successive frames.

Signals $DP_{ij}$ and $CO_{ij}$ from temporal processing unit 15 are distributed by spatial processing unit 17 into a first matrix 21 containing a number of rows and columns much smaller than the number of lines L of the frame and the number of pixels M per line. Matrix 21 preferably includes 2*l* + 1 lines along the y axis and 2*m*+1 columns along the x axis (in Cartesian coordinates), where *l* and *m* are small integer numbers. Advantageously, *l* and *m* are chosen to be powers of 2, where for example *l* is equal to $2^a$ and *m* is equal to $2^b$, a and b being integer numbers of about 2 to 5, for example. To simplify the drawing and the explanation, *m* will be taken to be equal to *l* (although it may be different) and $m=l=2^3=8$. In this case, matrix 21 will have 2 x 8 + 1 = 17 rows and 17 columns. Fig. 4 shows a portion of the 17 rows $Y_0$, $Y_1$,... $Y_{15}$, $Y_{16}$, and 17 columns $X_O$, $X_1$,... $X_{15}$, $X_{16}$ which form matrix 21.

Spatial processing unit 17 distributes into *l* x *m* matrix 21 the incoming flows of $Dp_{ijt}$ and $CO_{jt}$ from temporal processing unit 15. It will be appreciated that only a subset of all $DP_{ijt}$ and $CO_{ijt}$ values will be included in matrix 21, since the frame is much larger, having L lines and M pixels per row (e.g., 312.5 lines and 250-800 pixels), depending upon the TV standard used.

In order to distinguish the L x M matrix of the incoming video signal from the *l* x *m* matrix 21 of spatial processing unit 17, the indices i and j will be used to represent the coordinates of the former matrix and the indices x and y will be used to represent the coordinates of the latter. At a given instant, a pixel with an instantaneous value $PI_{ijt}$ is characterized at the input of the spatial processing unit 17 by signals $DP_{ijt}$ and $CO_{ijt}$. The (2*l*+1) x (2*m* + 1) matrix 21 is formed by scanning each of the L x M matrices for DP and CO.

In matrix 21, each pixel is defined by a row number between 0 and 16 (inclusive), for rows $Y_o$ to $Y_{16}$ respectively, and a column number between 0 and 16 (inclusive), for columns $X_o$ to $X_{16}$ respectively, in the case in which *l* = *m* = 8. In this case, matrix 21 will be a plane of 17 x 17 = 289 pixels.

In Fig. 4, elongated horizontal rectangles $Y_o$ to $Y_{16}$ (only four of which have been shown, i.e., $Y_0$, $Y_1$, $Y_{15}$ and $Y_{16}$) and vertical lines $X_0$ to $X_{16}$ (of which only four have been shown, i.e., $X_0$, $X_1$, $X_{15}$ and $X_{16}$) illustrate matrix 21 with 17 x 17 image points or pixels having indices defined at the intersection of an ordinate row and an abscissa column. For example, the $P_{88}$ is at the intersection of column 8 and row 8 as illustrated in Fig. 4 at position e, which is the center of matrix 21.

In response to the HP and BL signals from clock 20 (Fig. 2), a rate control or sequencing unit 19: i) generates a line sequence signal SL at a frequency equal to the quotient of 13.5 MHZ (for an image with a corresponding number of pixels) divided by the number of columns per frame (for example 400) to delay unit 18, ii) generates a frame signal SC, the frequency of which is equal to the quotient 13.5/400 MHZ divided by the number of rows in the video image, for example 312.5, iii) and outputs the HP clock signal. Blanking signal BL is used to render sequencing unit 19 non-operational during synchronization signals in the input image.

A delay unit 18 carries out the distribution of portions of the L x M matrix into matrix 21. Delay unit 18 receives the DP, CO, and incoming pixel S(PI) signals, and distributes these into matrix 21 using clock signal HP and line sequence and column sequence signals SL and SC.

In order to form matrix 21 from the incoming stream of DP and CO signals, the successive row, $Y_0$ to $Y_{16}$ for the DP and CO signals must be delayed as follows:

row $Y_0$ - not delayed;
row $Y_1$ - delayed by the duration of a frame line TP;
row $Y_2$ - delayed by 2 TP;
and so on until
row $Y_{16}$ - delayed by 16 TP.

The successive delays of the duration of a frame row TP, are carried out in a cascade of sixteen delay circuits

$r_1, r_2, ... r_{16}$ that serve rows $Y_1, Y_2 ... Y_{16}$, respectively, row $Y_0$ being served directly by the DP and CO signals without any delay upon arriving from temporal processing unit 15. All delay circuits $r_1, r_2 ... r_{16}$ may be built up by a delay line with sixteen outputs, the delay imposed by any section thereof between two successive outputs being constant and equal to TP.

Rate control unit 19 controls the scanning of the entire L x M frame matrix over matrix 21. The circular displacement of pixels in a row of the frame matrix on the 17 x 17 matrix, for example from $X_0$ to $X_{16}$ on row $Y_0$, is done by a cascade of sixteen shift registers d on each of the 17 rows from $Y_0$ to $Y_{16}$ (giving a total of 16 x 17 = 272 shift registers) placed in each row between two successive pixel positions, namely the register $d_{01}$ between positions $PI_{00}$ and $PI_{01}$ register $d_{02}$ between positions $PI_{01}$, and $PI_{02}$, etc. Each register imposes a delay TS equal to the time difference between two successive pixels in a row or line, using column sequence signal SC. Because rows $l_1$, $l_2$ ... $l_{17}$ in a frame $TR_1$ (Fig. 1), for S(PI) and for DP and CO, reach delay unit 18 shifted by TP (complete duration of a row) one after the other, and delay unit 18 distributes them with gradually increasing delays of TP onto rows $Y_0$, $Y_1$ ... $Y_{17}$, these rows display the DP and CO signals at a given time for rows $l_1, l_2 ... l_{17}$ in the same frame portion. Similarly in a given row, e.g., $l_1$, successive pixel signals $a_{1.1}$, $a_{1.2}$ ... arrive shifted by TS and shift registers d impose a delay also equal to TS. As a result, the pixels of the DP and CO signals in a given row $Y_0$ to $Y_{16}$ in matrix 21, are contemporary, i.e., they correspond to the same frame portion.

The signals representing the COs and DPs in matrix 21 are available at a given instant on the 16 x 17 = 272 outputs of the shift registers, as well as upstream of the registers ahead of the 17 rows, i.e., registers $d_{0.1}$, $d_{1.1}$.... $d_{16.1}$, which makes a total of 16 x 17 + 17 = 17 x 17 outputs for the 17 x 17 positions $P_{0.0}, P_{0.1}, ... P_{8.8} ... P_{16.16}$.

In order to better understand the process of spatial processing, the system will be described with respect to a small matrix M3 containing 3 rows and 3 columns where the central element of the 9 elements thereof is pixel e with coordinates x = 8, y = 8 as illustrated below:

| | | | |
|---|---|---|---|
| a | b | c | |
| d | e | f | (M3) |
| g | h | i | |

In matrix M3, positions a, b, c, d, f, g, h, i around the central pixel e correspond to eight oriented directions relative to the central pixel. The eight directions may be identified using the Freeman code illustrated in Fig. 6, the directions being coded 0 to 7 starting from the x axis, in steps of 45°. In the Freeman code, the eight possible oriented directions, may be represented by a 3-bit number since $2^3 = 8$.

Considering matrix M3, the 8 directions of the Freeman code are as follows:

| | | |
|---|---|---|
| 3 | 2 | 1 |
| 4 | e | 0 |
| 5 | 6 | 7 |

Returning to matrix 21 having 17 x 17 pixels, a calculation unit 17a examines at the same time various nested square second matrices centered on e, with dimensions 15 x 15, 13 x 13, 11 x 11, 9 x 9, 7 x 7, 5 x 5 and 3 x 3, within matrix 21, the 3 x 3 matrix being the M3 matrix mentioned above. Spatial processing unit 17 determines which matrix is the smallest in which pixels with DP = 1 are aligned along a straight line which determines the direction of movement of the aligned pixels.

For the aligned pixels in the matrix, the system determines if CO varies on each side of the central position in the direction of alignment, from +a in an oriented direction and -a in the opposite oriented direction, where 1<a<N. For example, if positions g, e, and c of M3 have values -1, 0, +1, then a displacement exists in this matrix from right to left in the (oriented) direction 1 in the Freeman code (Fig. 6). However, positions g, e, and c must at the same time have DP = 1. The displacement speed of the pixels in motion is greater when the matrix, among the 3 x 3 to 15 x 15 nested matrices, in which CO varies from +1 or -1 between two adjacent positions along a direction is larger. For example, if positions g, e, and c in the 9 x 9 matrix denoted M9 have values - 1, 0, +1 in oriented direction 1, the displacement will be faster than for values -1, 0, +1 in 3 x 3 matrix M3 (Fig. 7). The smallest matrix for which a line meets the test of DP=1 for the pixels in the line and CO varies on each side of the central position in the direction of alignment, from +a in an oriented direction and -a in the opposite oriented direction, is chosen as the principal line of interest.

Within a given matrix, a greater value of ±CO indicates slower movement. For example, in the smallest matrix, i.e., the 3x3 matrix, CO=±2 with DPs=1 determines subpixel movement i.e. one half pixel per image, and CO=±3, indicates slower movement, i.e. one third of a pixel per image. In order to reduce the calculation power in the system and to simplify the hardware, preferably only those values of CO which are symmetrical relative to the central pixel are considered.

Since CO is represented as a power of 2 in a preferred embodiment, an extended range of speeds may be identified using only a few bits for CO, while still enabling identification of relatively low speeds. Varying speed may be detected because, for example -2, 0, +2 in positions g, e, c in 3 x 3 matrix M3 indicates a speed half as fast as the speed corresponding to 1, 0, +1 for the same positions in matrix M3.

Two tests are preferably performed on the results to remove uncertainties. The first test chooses the strongest variation, in other words the highest time constant, if there are variations of CO along several directions in one of the nested matrices. The second test arbitrarily chooses one of two (or more) directions along which the variation of CO is identical, for example by choosing the smallest value of the Freeman code, in the instance when identical lines of motion are directed in a single matrix in different directions. This usually arises when the actual direction of displacement is approximately between two successive coded directions in the Freeman code, for example between directions 1 and 2 corresponding to an (oriented) direction that can be denoted 1.5 (Fig. 6) of about 67.5° with the x axis direction (direction 0 in the Freeman code).

The scanning of an entire frame of the digital video signal S preferably occurs in the following sequence. The first group of pixels considered is the first 17 rows or lines of the frame, and the first 17 columns of the frame. Subsequently, still for the first 17 rows of the frame, the matrix is moved column by column from the left of the frame to the right, as shown in Fig. 5, i.e., from portion $TM_1$ at the extreme left, then $TM_2$ offset by one column with respect to $TM_1$, until $TM_M$ (where M is the number of pixels per frame line or row) at the extreme right. Once the first 17 rows have been considered for each column from left to right, the process is repeated for rows 2 to 18 in the frame. This process continues, shifting down one row at a time until the last group of lines at the bottom of the frame, i.e., lines L - 16 ... L (where L is the number of lines per frame) are considered.

Spatial processing unit 17 generates the following output signals for each pixel: i) a signal V representing the displacement speed for the pixel, based upon the amplitude of the maximum variation of CO surrounding the pixel, the value of which may be, for example, represented by an integer in the range 0 - 7 if the speed is in the form of a power of 2, and therefore may be stored in 3 bits, ii) a signal DI representing the direction of displacement of the pixel, which is calculated from the direction of maximum variation, the value of DI being also preferably represented by an integer in the range 0 - 7 corresponding to the Freeman code, stored in 3 bits, iii) a binary validation signal VL which indicates whether the result of the speed and oriented direction is valid, in order to be able to distinguish a valid output with V = 0 and DI = 0, from the lack of an output due to an incident, this signal being 1 for a valid output or 0 for an invalid output, iv) a time constant signal CO, stored in 3 bits, for example, and v) a delayed video signal SR consisting of the input video signal S delayed in the delay unit 18 by 16 consecutive line durations TR and therefore by the duration of the distribution of the signal S in the 17x 17 matrix 21, in order to obtain a video signal timed to matrix 21, which may be displayed on a television set or monitor. Also output are the clock signal HP, line sequence signal SL and column sequence signal SC from control unit 19.

Nested hexagonal matrices (Fig 8) or an inverted L-shaped matrix (Fig. 9) may be substituted for the nested rectangular matrices in Figs. 4 and 7. In the case shown in Fig. 8, the nested matrices (in which only the most central matrices MR1 and MR2 have been shown) are all centered on point MR0 which corresponds to the central point of matrices M3, M9 in Fig. 7. The advantage of a hexagonal matrix system is that it allows the use of oblique coordinate axes $x_a$, $y_a$, and a breakdown into triangles with identical sides, to carry out an isotropic speed calculation.

The matrix in Fig. 9 is composed of a single row ($L_u$) and a single column ($C_u$) starting from the central position $MR_u$ in which the two signals DP and CO respectively are equal to "1" for DP and increase or decrease by one unit for CO, if movement occurs.

If movement is in the direction of the x coordinate, the CO signal is identical in all positions (boxes) in column $C_u$, and the binary signal DP is equal to 1 in all positions in row $L_u$, from the origin $MR_u$, with the value $CO_u$, up to the position in which CO is equal to $CO_u$ +1 or -1 inclusive. If movement is in the direction of the y coordinate, the CO signal is identical in all positions (boxes) in row $L_u$, and the binary signal DP is equal to I in all positions in column $C_u$, from the origin $MR_u$, with the value $CO_u$, up to the position in which CO is equal to $CO_u$, +1 or -1 inclusive. If movement is oblique relative to the x and y coordinates, the binary signal DP is equal to 1 and CO is equal to $CO_u$ in positions (boxes) of $L_u$ and in positions (boxes) of $C_u$, the slope being determined by the perpendicular to the line passing through the two positions in which the signal $CO_u$ changes by the value of one unit, the DP signal always being equal to 1.

Fig. 9 shows the case in which DP = I and $CO_u$ changes value by one unit in the two specific positions $L_{u3}$

and $C_{u5}$ and indicates the corresponding slope $P_P$. In all cases, the displacement speed is a function of the position in which CO changes value by one unit. If CO changes by one unit in $L_u$ or $C_u$ only, it corresponds to the value of the CO variation position. If CO changes by one unit in a position in $L_u$ and in a position in $C_u$, the speed is proportional to the distance between $MR_u$ and $E_x$ (intersection of the line perpendicular to $C_u$-$L_u$ passing through $MR_u$).

Fig. 10 shows an imaging device with sensors located at the intersections of concentric lines c and radial lines d that correspond to the rows and columns of a rectangular matrix imaging device. The operation of such an imaging device is controlled by a circular scanning sequencer. In this embodiment, angular sector shaped n x n matrices MC are formed, (a 3x3 matrix MC3 and a 5x5 matrix MC5 are shown) and except for sequencing differences, the matrices are processed identical to the square matrix embodiments discussed above.

As shown in Figs. 11-16, spatial and temporal processing unit 11 is used in connection with a histogram processor 22a for identifying objects within the input signal based upon user specified criteria for identifying such objects. A bus Z-$Z_1$ (See Figs. 2, 11 and 12) transfers the output signals of spatial and temporal processing unit 11 to histogram processor 22a. Histogram processor 22a generates composite output signal ZH which contains information on the areas in relative movement in the scene.

Referring to Fig. 12, histogram processor 22a includes a bus 23 for communicating signals between the various components thereof, for receiving input commands from a controller 42 and for transmitting output signals to controller 42. Histogram formation and processing blocks 24 - 29 receive the various input signals, i.e., delayed digital video signal SR, speed V, oriented directions (in Freeman code) DI, time constant CO, first axis x(m) and second axis y(m), which are discussed in detail below. The function of each histogram formation block is to enable a histogram to be formed for the domain associated with that block. For example, histogram formation block 24 receives the delayed digital video signal SR and enables a histogram to be formed for the luminance values of the video signal. Since the luminance of the signal will generally be represented by a number in the range of 0-255, histogram formation block 24 is preferably a memory addressable with 8 bits, with each memory location having a sufficient number of bits to correspond to the number of pixels in a frame.

Histogram formation block 25 receives speed signal V and enables a histogram to be formed for the various speeds present in a frame. In a preferred embodiment, the speed is an integer in the range 0-7. Histogram formation block 25 is then preferably a memory addressable with 3 bits, with each memory location having a sufficient number of bits to correspond to the number of pixels in a frame.

Histogram formation block 26 receives oriented direction signal DI and enables a histogram to be formed for the oriented directions present in a frame. In a preferred embodiment, the oriented direction is an integer in the range 0-7, corresponding to the Freeman code. Histogram formation block 26 is then preferably a memory addressable with 3 bits, with each memory location having a sufficient number of bits to correspond to the number of pixels in a frame.

Histogram formation block 27 receives time constant signal CO and enables a histogram to be formed for the time constants of the pixels in a frame. In a preferred embodiment, the time constant is an integer in the range 0-7. Histogram formation block 27 is then preferably a memory addressable with 3 bits, with each memory location having a sufficient number of bits to correspond to the number of pixels in a frame.

Histogram formation blocks 28 and 29 receive the x and y positions respectively of pixels for which a histogram is to be formed, and form histograms for such pixels, as discussed in greater detail below. Histogram formation block 28 is preferably addressable with the number of bits corresponding to the number of pixels in a line, with each memory location having a sufficient number of bits to correspond to the number of lines in a frame, and histogram formation block 29 is preferably addressable with the number of bits corresponding to the number of lines in a frame, with each memory location having a sufficient number of bits to correspond to the number of pixels in a line.

Referring to Figs. 12 and 14, each of the histogram formation blocks 24 - 29 has an associated validation block 30 - 35 respectively, which generates a validation signal V1 - V6 respectively. In general, each of the histogram formation blocks 24-29 is identical to the others and functions in the same manner. For simplicity, the invention will be described with respect to the operation of histogram formation block 25, it being appreciated that the remaining histogram formation blocks operate in a like manner. Histogram formation block 25 includes a histogram forming portion 25a, which forms the histogram for that block, and a classifier 25b, for selecting the criteria of pixels for which the histogram is to be formed. Histogram forming portion 25a and classifier 25b operate under the control of computer software in an integrated circuit (not shown), to extract certain limits of the histograms generated by the histogram formation block, and to control operation of the various components of the histogram formation units.

Referring to Fig. 14, histogram forming portion 25a includes a memory 100, which is preferably a conventional digital memory. In the case of histogram formation block 25 which forms a histogram of speed, memory 100 is sized to have addresses 0-7, each of which may store up to the number of pixels in an image. Between frames, memory 100 is initiated, i.e., cleared of all memory, by setting *init*=1 in multiplexors 102 and 104. This has the effect, with respect to multiplexor 102 of selecting the "0" input, which is output to the Data In line of memory 100. At the same time, setting *init*=1 causes multiplexor 104 to select the Counter input, which is output to the Address line of memory 100. The Counter input is connected to a counter (not shown) that counts through all of the addresses for memory 100, in this case O≤address≤7. This has the effect of placing a zero in all memory addresses of memory 100. Memory 100 is preferably cleared during the blanking interval between each frame. After memory 100 is cleared, the *init* line is set to zero, which in the case of multiplexor 102 results in the content of the Data line being sent to memory 100, and in the case of multiplexor 104 results in the data from spatial processing unit 117, i.e., the V data, being sent to the Address line of memory 100.

Classifier 25b enables only data having selected classification criteria to be considered further, meaning to possibly be included in the histograms formed by histogram formation blocks 24-29. For example, with respect to speed, which is preferably a value in the range of 0-7, classifier 25b may be set to consider only data within a particular speed category or categories, e.g., speed 1, speeds 3 or 5, speed 3-6, etc. Classifier 25b includes a register 106 that enables the classification criteria to be set by the user, or by a separate computer program. By way of example, register 106 will include, in the case of speed, eight registers numbered 0-7. By setting a register to "1", e.g., register number 2, only data that meets the criteria of the selected class, e.g., speed 2, will result in a classification output of "1". Expressed mathematically, for any given register in which R(k) = b, where k is the register number and b is the boolean value stored in the register:

$$\text{Output}= R(\text{data}(V))$$

So for a data point V of magnitude 2, the output of classifier 25b will be "1" only if R(2)=1. The classifier associated with histogram formation block 24 preferably has 256 registers, one register for each possible luminance value of the image. The classifier associated with histogram formation block 26 preferably has 8 registers, one register for each possible direction value. The classifier associated with histogram formation block 27 preferably has 8 registers, one register for each possible value of CO. The classifier associated with histogram formation block 28 preferably has the same number of registers as the number of pixels per line. Finally, the classifier associated with histogram formation block 29 preferably has the same number of registers as the number of lines per frame. The output of each classifier is communicated to each of the validation blocks 30-35 via bus 23, in the case of histogram formation blocks 28 an 29, through combination unit 36, which will be discussed further below.

Validation units 30-35 receive the classification information in parallel from all classification units in histogram formation blocks 24 - 29. Each validation unit generates a validation signal which is communicated to its associated histogram formation block 24 - 29. The validation signal determines, for each incoming pixel, whether the histogram formation block will utilize that pixel in forming it histogram. Referring again to Fig. 14, which shows histogram formation block 25, validation unit 31 includes a register block 108 having a register associated with each histogram formation block, or more generally, a register associated with each data domain that the system is capable of processing, in this case, luminance, speed, direction, CO, and x and y position. The content of each register in register block 108 is a binary value that may be set by a user or by a computer controller. Each validation unit receive via bus 23 the output of each of the classifiers, in this case numbered 0 ... p, keeping in mind that for any data domain, e.g., speed, the output of the classifier for that data domain will only be "1" if the particular data point being considered is in the class of the registers set to "1" in the classifier for that data domain. The validation signal from each validation unit will only be "1" if for each register in the validation unit that is set to "1", an input of "1" is received from the classifier for the domain of that register. This may be expressed as follows:

$$out = (\overline{in}_0 + \mathrm{Reg}_0).\ (\overline{in}_1 + \mathrm{Reg}_1)\ ...\ (\overline{in}_n + \mathrm{Reg}_n)(in_0\ + in_1 + ...\ in_n)$$

where $\mathrm{Reg}_0$ is the register in the validation unit associated with input $in_0$. Thus, using the classifiers in combination with validation units 30 - 35, the system may select for processing only data points in any selected classes within any selected domains. For example, the system may be used to detect only data points having speed 2, direction 4, and luminance 125 by setting each of the following registers to "1": the registers in the validation units for speed, direction, and luminance, register 2 in the speed classifier, register 4 in the direction classifier, and register 125 in the luminance classifier. In order to form those pixels into a block, the registers in the validation units for the x and y directions would be set to "1" as well.

Referring again to Fig. 13, validation signal V2 is updated on a pixel-by-pixel basis. If, for a particular pixel, validation signal V2 is "1", adder 110 increments the output of memory 100 by one. If, for a particular pixel, validation signal V2 is "0", adder 100 does not increments the output of memory. In any case, the output of adder 100 is stored in memory 100 at the address corresponding to the pixel being considered. For example, assuming that memory 100 is used to form a histogram of speed, which may be categorized as speeds 0-7, and where memory 100 will include 0-7 corresponding memory locations, if a pixel with speed 6 is received, the address input to multiplexor 104 through the data line will be 6. Assuming that validation signal V2 is "1", the content in memory at location 6 will be incremented.

Over the course of an image, memory 100 will contain a histogram of the pixels for the image in the category associated with the memory. If, for a particular pixel, validation signal V2 is "0" because that pixel is not in a category for which pixels are to be counted (e g., because that pixel does not have the correct direction, speed, or luminance), that pixel will not be used in forming the histogram.

For the histogram formed in memory 100, key characteristics for that histogram are simultaneously computed in a unit 112. Referring to Fig. 14, unit 112 includes memories for each of the key characteristics, which include the minimum (MIN) of the histogram, the maximum (MAX) of the histogram, the number of points (NBPTS) in the histogram, the position (POSRMAX) of the maximum of the histogram, and the number of points (RMAX) at the maximum of the histogram. These characteristics are determined in parallel with the formation of the histogram as follows:

For each pixel with a validation signal V2 of "1":

(a) if the data value of the pixel < MIN (which is initially set to the maximum possible value of the histogram), then write data value in MIN;

(b) if the data value of the pixel > MAX (which is initially set to the minimum possible value of the histogram), then write data value in MAX;

(c) if the content of memory 100 at the address of the data value of the pixel > RMAX (which is initially set to the minimum possible value of the histogram), then i) write data value in POSRMAX and ii) write the memory output in RMAX.

(d) increment NBPTS (which is initially set to zero).

At the completion of the formation of the histogram in memory 100 at the end of each frame, unit 112 will contain important data characterizing the histogram. The histogram in each memory 100, and the characteristics of the histogram in units 112 are read during the scanning spot of each frame by controller 42, and the memories 100 are cleared and units 112 are re-initialized for processing the next frame.

The system of the invention includes a semi-graphic masking function to select pixels to be considered by the system. Fig. 17 shows a typical image 53 consisting of pixels arranged in a Q x R matrix, which is divided into sub-matrices 51 each having a dimension of *s* x *t*, wherein each *s* x *t* sub-matrix includes *s* x *t* number of pixels of the image. Each sub-matrix shown in Fig. 17 is a 3x4 matrix. In a preferred embodiment, *s*=9 and *t*=12, although any appropriate sub-matrix size may be used, if desired, including 1 x 1. Referring to Fig. 12, histogram processor 22a includes a semi-graphic memory 50, which includes a one-bit memory location corresponding to each *s* x *t* matrix. For any given sub-matrix 51, the corresponding bit in memory 50 may be set to "0", which has the effect of ignoring all pixels in such sub-matrix 50, or may be set to "1" in which case all pixels in such sub-matrix will be considered in forming histograms. Thus, by using semi-graphic memory 50, it is possible to limit those areas of the image to be considered during histogram formation. For example, when an image of a road taken by a camera facing forward on a vehicle is used to detect the lanes of the road, the pixel information of the road at the farthest distances from the camera generally does not contain useful information. Accordingly, in such an application, the semi-graphic memory is used to mask off the distant portions of the road by setting semi-graphic memory 50 to ignore such pixels. Alternatively, the portion of the road to be ignored may be masked by setting the system to track pixels only within a detection box that excludes the undesired area of the screen, as discussed below.

In operation, for any pixel under consideration, an AND operation is run on the validation signal for such pixel and the content of semi-graphic memory 50 for the sub-matrix in which that pixel is located. If the content of semi-graphic memory 50 for the sub-matrix in which that pixel is located contains "0", the AND operation will yield a "0" and the pixel will be ignored, otherwise the pixel will be considered in the usual manner. It is foreseen that the AND operation may be run on other than the validation signal, with the same resultant functionality. Also, it is foreseen that memory 50 may be a frame size memory, with each pixel being independently selectable in the semi-graphic memory. This would enable any desired pixels of the image to be considered or ignored as desired. Semi-graphic memory 50 is set by controller 42 via data bus 23.

Fig. 16 shows an example of the successive classes $C_1$, $C_{2...}C_{n-1}$, $C_n$, each representing a particular velocity, for a hypothetical velocity histogram, with their being categorization for up to 16 velocities (15 are shown) in this example. Also shown is envelope 38, which is a smoothed representation of the histogram.

In order to locate the position of an object having user specified criteria within the image, histogram blocks 28 and 29 are used to generate histograms for the x and y positions of pixels with the selected criteria. These are shown in Fig. 13 as histograms along the x and y coordinates. These x and y data are output to moving area formation block 36 which combines the abscissa and ordinate information $x(m)_2$ and $y(m)_2$ respectively into a composite signal xy(m) that is output onto bus 23. A sample composite histogram 40 is shown in Fig. 13. The various histograms and composite signal xy(m) that are output to bus 23 are used to determine if there is a moving area in the image, to localize this area, and/or to determine its speed and oriented direction. Because the area in relative movement may be in an observation plane along directions x and y which are not necessarily orthogonal, as discussed below with respect to Fig. 18, a data change block 37 may be used to convert the x and y data to orthogonal coordinates. Data change block 37 receives orientation signals $x(m)_1$ and $y(m)_1$ for $x(m)_0$ and $y(m)_0$ axes, as well as pixel clock signals HP, line sequence and column sequence signals SL and SC (these three signals being grouped together in bundle F in Figs. 2, 4, and 10) and generates the orthogonal $x(m)_1$ and $y(m)_1$ signals that are output to histogram formation blocks 28 and 29 respectively.

In order to process pixels only within a user-defined area, the x-direction histogram formation unit 28 may be programmed to process pixels only in a class of pixels defined by boundaries, i.e. XMIN and XMAX. This is accomplished by setting the XMIN and XMAX values in a user-programmable memory in x-direction histogram formation unit 28 or in linear combination units 30-35. Any pixels outside of this class will not be processed. Similarly, y-direction histogram formation unit 29 may be set to process pixels only in a class of pixels defined by boundaries YMIN and YMAX. This is accomplished by setting the YMIN and YMAX values in a user-programmable memory in y-direction histogram formation unit 29 or in linear combination units 30-35. Thus, the system can process pixels only in a defined rectangle by setting the XMIN and XMAX, and YMIN and YMAX values as desired. Of course, the classification criteria and validation criteria from the other histogram formation units may be set in order to form histograms of only selected classes of pixels in selected domains within the selected rectangular area. The XMIN and XMAX memory locations have a sufficient number of bits to represent the maximum number of pixels in the x dimension of the image under consideration, and the YMIN and YMAX memory locations have a sufficient number of bits to represent the maximum number of pixels in the y dimension the image under consideration. As discussed further below, the x and y axes may be rotated in order to create histograms of projections along the rotated axes. In a preferred embodiment, the XMIN, XMAX, YMIN and YMAX memory locations have a sufficient number of bits to represent the maximum number of pixels along the diagonal of the image under consideration (the distance from "Origin" to "Stop" in Fig. 15). In this way, the system may be used to search within a user-defined rectangle along a user-defined rotated axis system.

In order for a pixel PI(a,b) to be considered in the formation of x and y direction histograms, whether on the orthogonal coordinate axes or along rotated axes, the conditions $XMIN<a<XMAX$ and $YMIN<b<YMAX$ must be satisfied. The output of these tests may be ANDed with the validation signal so that if the conditions are not satisfied, a logical "0" is ANDed with the validation signal for the pixel under consideration, thereby avoiding consideration of the pixel in the formation of x and y direction histograms.

Fig. 13 diagrammatically represents the envelopes of histograms 38 and 39, respectively in x and y coordinates, for velocity data. In this example, $x_M$ and $y_M$ represent the x and y coordinates of the maxima of the two histograms 38 and 39, whereas $l_a$ and $l_b$ for the x axis and $l_c$ and $l_d$ for the y axis represent the limits of the range of significant or interesting speeds, $l_a$ and $l_c$ being the longer limits and $l_b$ and $l_d$ being the upper limited of the significant portions of the histograms. Limits $l_a$, $l_b$, $l_c$ and $l_d$ may be set by the user or by an application program using the system, may be set as a ratio of the maximum of the histogram, e.g., $x_M/2$, or may be set as otherwise desired for the particular application.

The vertical lines $L_a$ and $L_b$ of abscissas $l_a$ and $l_b$ and the horizontal lines $L_c$ and $L_d$ of ordinals $l_c$ and $l_d$ form a rectangle that surrounds the cross hatched area 40 of significant speeds (for all x and y directions). A few smaller areas 41 with longer speeds, exist close to the main area 40, and are typically ignored. In this example, all that is necessary to characterize the area with the largest variation of the parameter for the histogram, the speed V in this particular case, is to identify the coordinates of the limits $l_a$, $l_b$, $l_c$ and $l_d$ and the maxima $X_M$ and $Y_M$, which may be readily derived for each histogram from memory 100, the data in units 112, and the xy(m) data block.

Thus, the system of the invention generates in real time, histograms of each of the parameters being detected. Assuming that it were desired to identify an object with a speed of "2" and a direction of "4", the validation units for speed and direction would be set to "1", and the classifiers for speed "2" and direction "4" would be set to "1". In addition, since it is desired to locate the object(s) with this speed and direction on the video image, the validation signals for histogram formation blocks 28 and 29, which correspond to the x and y coordinates, would be set to "1" as well. In this way, histogram formation blocks 28 and 29 would form histograms of only the pixels with the selected speed and direction, in real-time. Using the information in the histogram, and especially POSRMAX, the object with the greatest number of pixels at the selected speed and direction could be identified on the video image in real-time. More generally, the histogram formation blocks can localize objects in real-time meeting user-selected criteria, and may produce an output signal if an object is detected. Alternatively, the information may be transmitted, e.g., by wire, optical fiber or radio relay for remote applications, to a control unit, such as unit 10a in Fig. 1, which may be near or remote from spatial and temporal processing unit 11.

While the system of the invention has been described with respect to formation of histograms using an orthogonal coordinate system defined by the horizontal and vertical axes of the video image, the system may be used to form histograms using non-orthogonal axes that are user-defined. Figs. 15A and 15B show a method of using rotation of the analysis axis to determine the orientation of certain points in an image, a method which may be used, for example to detect lines. In a preferred embodiment, the x-axis may be rotated in up to 16 different directions (180°/16), and the y-axis may be independently rotated by up to 16 different directions. Rotation of the axes is accomplished using data line change block 37 which receives as an input the user-defined axes of rotation for each of the x any y axes, and which performs a Hough transform to convert the x and y coordinate values under consideration into the rotated coordinate axis system for consideration by the x and y histogram formation units 28 and 29. The operation of conversion between coordinate systems using a Hough transform is known in the art. Thus, the user may select rotation of the x-coordinate system in up to 16 different directions, and may independently rotate the y-coordinate system in up to 16 different directions. Using the rotated coordinate systems, the system may perform the functionality described above, including searching within user-defined rectangles (on the rotated axes), forming histograms on the rotated axes, and searching using velocity, direction, etc.

As discussed above, each histogram formation unit calculates the following values for its respective histogram.

MIN, MAX, NBPTS, RMAX, POSRMAX

Given that these values are calculated in real-time, the use of these values allows the system to rapidly identify lines on an image. While this may be accomplished in a number of different ways, one of the easier methods is to calculate R, where R =NBPTS/RMAX, i.e., the ratio of the number of points in the histogram to the number of points in the maximal line. The smaller this ratio, i.e., the closer R approaches 1, the more perpendicularly aligned the data points under consideration are with the scanning axis.

Fig. 15A shows a histogram of certain points under consideration, where the histogram is taken along the x-axis, i.e., projected down onto the x-axis. In this example, the ratio R, while not calculated, is high, and contains little information about the orientation of the points under consideration. As the x-axis is rotated, the ratio R increases, until, as shown in Fig. 15B, at approximately 45° the ratio R would reach a maximum. This indicates that the points under consideration are most closely aligned perpendicular to the 45° x-axis. In operation, on successive frames, or on the same frame if multiple x-direction histogram formation units are available, it is advantageous to calculate R at different angles, e.g., 33.75° and 57.25° (assuming the axes are limited to 16 degrees of rotation), in order to constantly ensure that R is at a minimum. For applications in which it is desirable to detect lines, and assuming the availability of 16 x-direction histogram formation units, it is advantageous to carry out the calculation of R simultaneously along all possible axes to determine the angle with the minimum R to determine the direction of orientation of the line. Because the x and y axes may be rotated independently, the x and y histogram formation units are capable of simultaneously independently detecting lines, such as each side line of a road, in the same manner.

As discussed above, the system of the invention may be used to search for objects within a bounded area defined by XMIN, XMAX, YMIN and YMAX. Because moving object may leave the bounded area the system preferably includes an anticipation function which enables XMIN, XMAX, YMIN and YMAX to be automatically modified by the system to compensate for the speed and direction of the target. This is accomplished by determining values for O-MVT, corresponding to orientation (direction) of movement of the target within the bounded area using the direction histogram, and I-MVT, corresponding to the intensity (velocity) of movement. Using these parameters, controller 42 may modify the values of XMIN, XMAX, YMIN and YMAX on a frame-by-frame basis to ensure that the target remains in the bounded box being searched. These parameters also enable the system to determine when a moving objet, e.g., a line, that is being tracked based upon its axis of rotation, will be changing its axis of orientation, and enable the system to anticipate a new orientation axis in order to maintain a minimized value of R.

Referring to Fig. 12, a controller 42, which is preferably a conventional microprocessor-based controller, is used to control the various elements of the system and to enable user's input of commands and controls, such as with a computer mouse and/or keyboard (not shown), or other input device. Components 11a and 22a, and controller 42, are preferably formed on a single integrated circuit. Controller 42 is in communication with data bus 23, which allows controller 42 to run a program to control various parameters that may be set in the system and to analyze the results. In order to select the criteria of pixels to be tracked, controller 42 may also directly control the following: i) content of each register in classifiers 25b, ii) the content of each register in validation units 31, iii) the content of XMIN, XMAX, YMIN and YMAX, iv) the orientation angle of each of the x and y axes, and v) semi-graphic memory 50. Controller 42 may also retrieve i) the content of each memory 100 and ii) the content of registers 112, in order to analyze the results of the histogram formation process. In addition, in general controller 42 may access and control also all other data and parameters used in the system.

Figs. 18-25 show an example of use of the system of the invention to perform certain functions useful for automatic vehicle cruise-control, including detection of the lines on a road, detection of lanes on a road in which the vehicle is driving, and detection of vehicles passing or being passed by the vehicle under consideration. Referring to Fig. 18, the lane 200 and of a road is generally defined by a line 202 bounding the left side of the lane and of a line 204 bounding the right side of the lane. In general, these lines may be i) solid or broken, ii) single or double lines, and iii) white or yellow, depending upon the type of road under consideration. In case of merging lanes and exit lanes, the line bounding the side of the road may end temporarily, with one or more lines merging with or diverging from the lane.

The invention will be described with respect to detection of a solid white line 204 on the right side of the lane. Referring to Fig. 19, controller 42 is initially placed in an acquisition mode (206). Since a white line is defined by high luminance, controller 42 sets the registers 106 in the luminance linear combination unit to detect high luminance levels (208). Other features that may be associated with the right side line are motion (DP) and direction (DI). It is foreseen that these and other features associated with the line may be tracked, if desired. The actual luminance levels will vary depending upon various factors, such as ambient lighting, time of day, weather conditions, etc. Keeping in mind that controller 42 is able to access the histogram calculated for luminance from histogram formation unit 24, controller 42 may use a threshold or other desired technique to select the desired luminances to search for the white line, e.g., selecting the top 15% of luminance values for consideration.

This example will assume that only a single x-dimension histogram formation unit is available for use. As such, the detection of the angle of a line is accomplished by sweeping through a number of angles until the value of R, or any other desired parameter indicating the alignment of the line is achieved. Were multiple x-dimension histogram formation units available, the calculation of R at different angles could be accomplished simultaneously.

The right side line is normally located within some fixed area to the right of the vehicle angling inward on the video image. Accordingly, controller 42 sets the x-axis to a starting angle normally associated with the right side line (210) (the Initial Search Axis shown in Fig. 18), and sets the positions of XMIN, XMAX, YMIN and YMAX to cover a rectangular area to the right of the vehicle normally associated with the right line (212) (initial values of XMIN, XMAX, YMIN and YMAX are shown in Fig. 18). In the search mode, during which time the line is being acquired, XMIN, XMAX, YMIN and YMAX are set to cover a wider area than normal in order to maximize the likelihood of detection of the line.

In order to confirm detection of the line, the controller runs one or more tests on the histogram at the desired luminance levels in the desired area. For example, the line would normally be expected to have a certain length. Accordingly, the system looks for a threshold minimum number of pixels at RMAX (214). If the threshold is met, the line is considered as being acquired. If the threshold is not met, the x-axis is rotated (216), and a new histogram is determined for the next frame. This procedure is repeated until the line is acquired. Normally, during acquisition, the angle of the x-axis is swept up to two positions, i.e., 22.5° in the preferred embodiment, to the left and right of the starting x-axis until the target is acquired.

Once the line has been acquired, the system operates in a track mode (217). In the track mode, XMIN, XMAX, YMIN and YMAX are set to cover a narrower area than during the acquisition mode to more closely cover the detected line (226). During the track mode the x-axis is normally over a smaller area (218), i.e., 11.25° to the left and right of the axis on which the line has been detected, in order to maximize R (220), which ensures that the correct angle of the line is constantly tracked. If tracking of the line is lost, e.g., because the controller fails to detect a threshold minimum number of pixels at RMAX (222), the search mode is reinitiated. Once a track is obtained on the line, controller 42 may constantly monitor the luminance histogram in the tracked area to update the luminance levels associated with the line (224).

Detection of the line may be achieved using any other criteria that are searchable using the system. For example, the system of the invention may be used to detect hue and saturation when used in connection with a color camera. Were the system acquiring a yellow line, controller 42 could set the linear combination unit of the hue histogram formation unit to detect those hues associated with the color yellow. Were the system detecting a double line, there are a number of methods by which the system may be augmented. A double line is characterized by a histogram having a peak associated with each line, wherein the peaks are separated by a known distance. With two x-direction histogram formation units, each could be set to track a narrow rectangular area associated with a single line, wherein the narrow areas are separated from each other by the known distance. Both histogram formation units sweep simultaneously, and only when both histogram formation units have detected a line simultaneously, has the double line been acquired. Alternatively, a single histogram formation unit may be used to detect both lines in a similar manner over a period of two frames, with a first line being detected during the first image or frame, and the second line detected during the next image or frame. This process is repeated to maintain track on the lines. During acquisition, the x-axis is preferably swept until a first line is acquired before attempting to acquire the second line. Since the second line may be positioned on either side of the first line, the search for the second line may be attempted at the known distance on each side of the first line until the second line is acquired.

Alternatively, a single histogram formation unit may be used to detect the double line. In this embodiment the initial scanning area is set to be large enough to cover both lines. Since the histogram of the two lines will have two peaks, rather that using RMAX to detect the lines controller 42 may directly access and analyze the histogram of the selected area from memory 100 during the blanking interval, to locate the two peaks in the histogram that are associated with the two lines. As in the prior embodiment, each peak must have at least a minimum number of pixels or other characteristic indicative of a line to confirm acquisition of the double lines. Upon detecting the two peaks in the histogram, i.e., upon acquiring the lines, the system sweeps (rotates) the x-axis to maintain a maximum in the peaks of the histogram, i.e., to maintain track the lines.

Detection of broken lines is similar and may be accomplished through a number of techniques. Broken lines would normally be associated with a time-varying histogram in which the number of points in the histogram and the peak of the histogram varies in a known cyclical manner. Thus, broken lines may normally be detected by any technique in which the histogram in the selected area associated with the line is time averaged, such as by having controller 42 perform any desired time averaging function on the histogram of the broken line, or by analyzing the peaks of the histogram of the line over time to detect the periodic fluctuations in the number of points in the histogram that would be associated with a broken line.

Referring to Fig. 20, a single detection area 226 may be used to cover an area large enough to cover a broken line 228 and the gap between broken lines, or some known multiple of lines. In this embodiment, detection of a broken line is similar to detection of a solid line, i.e., formation of a histogram of the pixels within the selected area and rotation of the axis of the detection area to maintain the line parallel to the detection axis, provided that the histogram of the detection area will be characterized by having fewer pixels than for a solid line.

Alternatively, referring to Figs. 21A and 21B, a first detection area 230 may be used to detect a first portion of the broken line, and a second detection area 232 may be used to detect a second portion of the broken line. Each of these detection areas is preferably sized to receive in it a solid portion of the broken line, keeping in mind that, due to perspective, detection area 232 will generally be smaller than detection area 230 despite the fact that each is sized to cover the same area. Controller 42 is able to distinguish a broken line from a solid line by monitoring the histograms of each of the first and second detection areas, and by monitoring the cross-over of a line from detection area 230 to detection area 232. As shown in Fig. 21B, which shows a graph of RMAX for each of detection areas 230 and 232 over time, each graph varies generally sinusoidally, and each is an inverse of the other. By monitoring the peaks of the histograms over time, controller 42 can detect when RMAX is at a peak, and thus when the line is perpendicular to the projection axis. Of course, each peak must meet a threshold value to indicate detection of the line, at which time the detection axis may be rotated to maintain a maximum in the peak value. If the peak of the histogram falls below the threshold value, the system may enter into search mode over a wider area to reacquire the line. Within detection area 232, controller 42 will preferably identify a location of the line and an orientation angle of the line. As the line crosses from detection area 232 to detection area 230, controller 42 may also control the histogram formation unit for area 230 to cover the location and the angle determined with respect to detection area 232 in order to maintain better track of the broken line. Of course, controller 42 may maintain track of the line using a single detection box, if desired, by tracking the peak of the histogram over time.

As discussed above, the x and y axes may be rotated independently of one another. Thus, while the invention has been described with respect to using the x-direction histogram to detect the right line, it will be appreciated that the y-direction histogram may be used to simultaneously detect the left line, or vice versa, in the same manner as discussed above, and each of the x and y histogram formation units may also be used to detect the same line, or different portions thereof.

As shown in Figs. 22 and 23, the system of the invention may be used to detect a vehicle passing or being passed by the vehicle under consideration. In general, detection of vehicles passing or being passed is made more robust by first detecting the area of the lane(s) adjacent to the lane in which the subject vehicle is moving. Described above is a technique for detecting a solid, broken or double lines. This example will assume that a vehicle to be detected is located in the lane 236 to the left of the lane 237 of the vehicle under consideration. Initially, it is desirable to detect the line 234 immediately to the left of the subject vehicle, i.e., the right line of lane 236. This is accomplished, as described above, by entering into a search mode until the line is detected, and then remaining in a track mode (240). The left side line 238 of lane 236 is generally a known distance d from line 234 at a known difference in orientation. Once right side line 234 has been detected, the system enters into a search mode to locate the left side line (241). Once the left side line has been acquired, the location of lane 236 is known, and controller 42 sets the histogram formation units to search only the area bounced by lines 234 and 238 by setting XMIN, XMAX, YMIN and YMAX to cover only the lane area (242). The axis to be searched is set (244) by controller 42 to be parallel to lines 234 and 238.

Once the search area has been determined, which may occur in as little as one frame, controller 42 sets the histogram formation units to detect pixels having characteristics of a moving vehicle (246). These characteristics are diverse, and depend upon numerous factors, such as time of day, ambient lighting, etc. At night, vehicles are most easily detected using the high luminance of the vehicle headlights or taillights. Taillights may also be detecting using the hue and saturation of the red lights. In daylight conditions, motion of the vehicle may be detected by detecting movement in the lane area (DP), velocity, luminance, movement in a direction parallel to the lane lines, color, etc., or combinations of these factors.

For the present example, it will be assumed that the system is tracking a vehicle at night moving in a positive direction, i.e., the vehicle is passing the subject vehicle. Controller 42 preferably sets the histogram processing units to detect the hue and saturation associated with red lights, high luminance values, and velocity in the positive direction parallel to the lane lines. Fig. 22 shows the detected pixels 239. Also shown are histograms of the resultant pixels taken along an x-axis 241 approximately perpendicular to the lane, and along a y-axis 243 set for this example to be perpendicular to the x-axis (although the y-axis is not required to be perpendicular to the x-axis). Using the information in these histograms, processor 42 may determine numerous pieces of information about the vehicle. The velocity of the vehicle may be determined by the velocity V values of the pixels in movement. This velocity value may be verified by tracking POSRMAX of the y-direction histogram, which will move at the same velocity as the vehicle. The left and right taillights may be separately identified either by i) using a separate detection box for each light, or ii) by having processor 42 scan the histogram taken along the x-axis to locate the two peaks in the histogram. Once each light is identified, the approximate distance between the passing vehicle and the subject vehicle may be determined. If the lights are separately identified using separate detection boxes, the determination that the detected objects are a vehicle may be verified by verifying that the two detected lights are moving at the same speed in the same direction. Detection of vehicles moving in other directions is accomplished using similar techniques.

As shown in figures 24 and 25 the system of the invention makes it possible to determine an area including a line 924, the area being limited by two perpendicular axes 824, one of them being sensibly perpendicular to said line. In case a curve 925 has to be determined, said curve is segmented into sensibly linear portions where one of two perpendicular axes 825, 825', 825" delimiting an area including said sensibly linear portion, is sensibly perpendicular to said linear portion.

It will be appreciated that while the invention has been described with respect to detection of certain types of objects using certain techniques, the invention is a generic image processor and is capable of detecting these and other objects using any possible measurable characteristics of the pixels, and that any information discernible from the histograms formed by the invention may be used to detect, track, and characterize targets. More generally, although the present invention has been described with respect to certain embodiments and examples, variations exist that are within the scope of the invention as described in the following claims.

## Claims

1. A process for identifying a line in an input image, the image comprising a plurality of pixels corresponding to the line, the process including an elementary operation comprising:

   - projecting pixels onto a projection axis defined by a rotation angle related to a reference axis, as to form a projection waveform;
   - analyzing the projection waveform to identify characteristics indicative of a line;
   - the image is processed in order to select pixels of the image having characteristics corresponding to characteristics of the line, the selected pixel characteristics being at least from the group consisting of luminance, hue, saturation;

   **characterised in that**

   - the projection waveform is an histogram;
   - the group for selected pixel characteristics further comprise direction, DP, CO and velocity, DP identifying a significant variation of a pixel with respect to the same pixels in one or more images which immediately precede the input image in an image sequence, and CO being an updated time constant to be used for smoothing a pixel value with respect to images which immediately precede the input image in said image sequence.
   - and that N x S elementary operations are done in parallel processing with the selected pixels on S =2 sets of N > 3 predetermined projection axes, each set being related to a set of reference axes {x,y}, the N predetermined projection axes of each set being regularly distributed from the set reference axis with a stepping angle of 180°/N;
   - and that, if the analyses of the histograms of a set are not indicative of a line:

     the N predetermined projection axes of said set are rotated with a same rotation angle and the elementary operations are done until an analysis of the histograms is indicative of a line.

2. The process according to claim 1 **characterised in that** the elementary operations are done in parallel for the S=2 sets, the sets being chosen related to {x, y} orthogonal references axes.

3. The process according to the claim 2 **characterised in that** the reference axes are chosen as being the horizontal and vertical axes of the image.

4. The process according to claim 1 **characterised in that** the elementary operations are done in parallel for the S=2 sets, the sets being chosen related to {x, y} non orthogonal reference axes.

5. The process according to any one of claims 1 to 4 **characterised in that** the elementary operations are done in parallel for the S=2 sets of N=16 predefined projection axes.

**6.** The process according to one of claims 1 to 5 **characterised in that** it further comprises the identification of the orientation of the line, the process further comprising the step of:

if the analyses of the histograms of a set are not indicative of a line most closely perpendicular to one of N predetermined projection axes of said set:

the N predetermined projection axes of said set are rotated with a same rotation angle and the elementary operations are done until an analysis of the histograms is indicative of a line most closely perpendicular to one of N predetermined projection axes of said set.

**7.** The process according to claim 6 **characterised in that** the histogram characteristics comprise R =NBPTS/RMAX, and **in that** the line is determined to be most closely perpendicular to the predetermined projection axis at which R is a minimum, NBPTS being the number of points in the histogram and RMAX being the number of points at the maximum of the histogram.

**8.** The process according to one of the claim 1 to 7 **characterised in that** a camera is mounted on a vehicle and an input image of the road is acquired in order to identify a line on a road.

**9.** The process according to claim 8 wherein the line on a road is a broken line, **characterised in that** the step of analyzing the histogram to identify characteristics indicative of a line comprises time averaging the histogram over a succession of frames of the image.

**10.** The process according to claim 8 wherein the line on a road is a broken line, **characterised in that** the step of analyzing the histogram to identify characteristics indicative of a line comprises analyzing the histogram over a succession of frames of the image to identify a periodic fluctuation in peaks of the histogram indicative of a broken line.

**11.** The process according to claim 8 wherein the line is a broken line, **characterised in that** the step of selecting pixels of the image having characteristics corresponding to characteristics of the line comprises selecting pixels in a first desired area of the image for selecting pixels associated with a first portion of the broken line, and selecting pixels in a second desired area of the image for selecting pixels associated with a second portion of the broken line adjacent to the first section; and

that the step forming histograms of the selected pixels projected onto a first set of N predetermined axes comprises forming a first set of histograms of the selected first pixels projected onto a first set of N predetermined axes and forming a second set of histograms of the selected second pixels projected onto the first set of N predetermined axes; and

that the step of analyzing the histogram to identify characteristics Indicative of a line comprises analyzing the first and second sets of histograms over a succession of frames of the Image to Identify a periodic movement of first pixels associated with the line from the first desired area to the second desired area.

**12.** The process according to claim 8 wherein the line is a broken line, **characterised in that** step of selecting pixels of the image having characteristics corresponding to characteristics of the line comprises selecting pixels in a first desired area of the image for selecting pixels associated with a first portion of the broken line, and selecting pixels in a second desired area of the image for selecting pixels associated with a second portion of the broken line adjacent to the first section; and

that the step forming histograms of the selected pixels projected onto sets of N predetermined axes comprises forming a first set of histograms of the selected first pixels projected onto a first set of N predetermined axes and forming a second set of histograms of the selected second pixels projected onto a second set of N predetermined axes; and

that the step of analyzing the histograms to identify characteristics indicative of a line comprises analyzing the histograms from first and second sets over a succession of frames of the image to identify a periodic movement of first pixels associated with the line from the first desired area to the second desired area.

**13.** The process according to any one of claims 8 to 12 wherein the line is a parallel double line, **characterised in that** the step of analyzing the histogram to identify characteristics indicative of a line comprises analyzing the histogram to identify two peaks characteristic of a parallel double line.

**14.** The process according to any one of claims 8 to 12 **characterised in that** a camera is mounted on a vehicle and an input image of the road is acquired in order to identify a line on a road which is a double line and that the step of selecting pixels of the image having characteristics corresponding to characteristics of the line comprises selecting pixels in a first desired area of the image at a first desired orientation in the image for selecting pixels associated with the first line, and selecting pixels in a second desired area of the image at a second desired orientation in the image for selecting pixels associated with the second line; and

that the step of forming histograms of the selected pixels projected onto sets of N predetermined axes comprises forming a first set of histograms of the selected first pixels projected onto a first set of N predetermined axes and forming a second set of histograms of the selected second pixels projected onto the first set of predetermined axes; and

that the step of analyzing the histograms to identify characteristics indicative of a line comprises analyzing each of the histograms in the first and second sets to identify characteristics Indicative of a line; and

that if the analysis of the histograms of the first set are not indicative of a line:

the N predetermined projection axes of said set are rotated with a same rotation angle and the elementary operations are done until an analysis of the histograms is indicative of a line.

**15.** The process according to any one of claims 8 to 12 **characterised in that** a camera Is mounted on a vehicle and an input image of the road is acquired in order to identify a line on a road which is a double line and that the step of selecting pixels of the image having characteristics corresponding to characteristics of the line comprises selecting pixels in a first desired area of the image at a first desired orientation in the image for selecting pixels associated with the first line, and selecting pixels in a second desired area of the image at a second desired orientation in the image for selecting pixels associated with the second line; and

that the step of forming histograms of the selected pixels projected onto sets of N predetermined axes comprises forming a first set of histograms of the selected first pixels projected onto a first set of N predetermined axis and forming a second set of histograms of the selected second pixels projected onto a second set of predetermined axes; and

that the step of analyzing the histograms to identify characteristics Indicative of a line comprises analyzing histograms of first and second sets to identify characteristics indicative of a line; and

that, if the analysis of the histograms of a set are not indicative of a lines, the N predetermined projection axes of said set are rotated with a same rotation angle and the elementary operations are done until an analysis of the histograms is indicative of a line.

**16.** The process according to any one of claims 8 to 15 **characterised in that** a camera Is mounted on a vehicle and an input image of the road is acquired in order to detect a lane on a road from the vehicle-mounted camera, the lane being defined by a first line on one side thereof and a second line on the other side thereof, the process comprising the steps of:

acquiring an image of the road from the camera, each of the first and second side lines comprising a plurality of pixels in the image;
selecting pixels of the image in a first desired area of the image at a first desired orientation In the image for selecting pixels associated with the first side line, and selecting pixels in a second desired area of the Image at a second desired orientation In the image for selecting pixels associated with the second side line; and
identifying the first side line and the second side line.

**17.** The process according to claim 16 **characterised in that** a camera is mounted on a vehicle and an input image of the road Is acquired in order to detect a vehicle in an adjacent lane from a camera mounted to a subject vehicle, the adjacent lane being defined by a first line on one side thereof and a second line on the other side thereof, the process comprising the steps of:

acquiring an image of the road from the camera, each of the first and second side lines comprising a plurality of pixels in the image;
detecting an adjacent lane by identifying the first side line and the second side line of said adjacent lane;
selecting pixels of the image having characteristics corresponding to characteristics of a vehicle, by selecting such pixels in an area bounded by the first and second side lines;
forming a histogram of the selected pixels projected onto a first set of predetermined axes; and
analyzing the histogram to detect characteristics indicative of a vehicle.

**18.** The process according to claim 17 **characterised in that** the step of analyzing the histogram to detect characteristics indicative of a vehicle comprises detecting a histogram having NBPTS exceeding a threshold, NBPTS being the number of points in the histogram.

19. The process according to claim 17 or 18 **characterised in that** the step of selecting pixels of the image having characteristics corresponding to characteristics of a vehicle comprises selecting pixels having a color or luminance characteristic of taillights.

20. The process according to claim 19 analyzing the histogram to detect characteristics indicative of a vehicle comprises analyzing the histogram to separately detect each taillight.

21. The process according to claim 17 or 18 **characterised in that** the step of selecting pixels of the image having characteristics corresponding to characteristics of a vehicle comprises selecting pixels having a color or luminance characteristic of headlights.

22. The process according to claim 21 analyzing the histogram to detect characteristics indicative of a vehicle comprises analyzing the histogram to separately detect each headlight.

23. The process according to one of claims 17 to 22 **characterised in that** the step of selecting pixels of the Image having characteristics corresponding to characteristics of a vehicle comprises selecting pixels moving in a direction parallel to a direction of the adjacent lane.

24. The process according to one of claims 17 to 23 **characterised in that** the step of selecting pixels of the image having characteristics corresponding to characteristics of a vehicle comprises selecting pixels moving in a direction generally parallel to one of the first and second side lines.

25. The process according to one of claims 17 to 22 **characterised in that** it comprises the step of dynamically adapting in function of results at least one or more of the following parameters: classification, areas, histograms.

26. An apparatus for identifying the orientation of a line in an input image, the line comprising a plurality of pixels, said apparatus having means for:

- projecting pixels onto a projection axis defined by a rotation angle related to a reference axis, as to form a projection waveform;
- analyzing the projection waveform to identify characteristics indicative of a line;
- processing the image in order to select pixels of the image having characteristics corresponding to characteristics of the line, the selected pixel characteristics being at best from the group consisting of luminance, hue, saturation;

**characterised In that** the projection waveform is an histogram, the group of selected pixel characteristics further comprising direction, DP, CO and velocity, DP identifying a significant variation of a pixel with respect to the same pixels in one or more images which immediately precede the input image in an image sequence, and CO being an updated time constant to be used for smoothing a pixel value with respect to images which immediately precede the input image in said image sequence, and that it comprises an Image processing system interfaced with a controller comprising histogram formation units and rotation units for S = 2 sets of N >3 predetermined projection axes, each set being related to a set of reference axes {x,y}, said histogram formation units forming histograms of the pixels projected on the predetermined projection axes of sets, and said rotation units rotating by a same rotation angle the predetermined projection axes of sets;

- the controller analyzing the histograms to determine when the histograms of a set comprises characteristics indicating that the line is most closely perpendicular to one of the predetermined axes of said set, and
- the controller being able to rotate the N predetermined axis of a set through the rotation units and to perform in parallel S x N elementary operations comprising said steps of projecting, analyzing and processing.

27. The apparatus according to claim 26 **characterised in that** the rotation unit comprises a Hough transform unit performing a Hough transform on the pixels for enabling rotation of the predetermined axis.

28. The apparatus according to claim 26 or 27 **characterised In that** each histogram formation unit comprises an area selection memory for selecting an area of an image for which to form a histogram, the controller controlling the histogram formation unit to select pixels in a desired area of the image for detecting the line.

**29.** The apparatus according to any one of claims 26 to 28 **characterised in that** the interface between the image processing system and the controller comprises:

input signals from the controller to the image processing system including control signals selected from the group consisting of:

i) signals for selecting domains for processing by the image processing system, said domains being selected from the group consisting of luminance, hue, saturation, CO, DP, direction, and velocity;
ii) signals for selecting classes of pixels within each domain for processing by the image processing system,
iii) signals for selecting rotation angle of sets for formation of histograms projected on the predefined axes of the sets, and
iv) signals for selecting an area of an image for processing by the image processing system; and

output signals from the image processing system to the controller including signals resultant from processing the Input signals selected from the group consisting of:

I) signals containing information on histograms formed in the image processing system, and
ii) signals containing histograms formed in the image processing system.

**30.** The apparatus according to claim 29 **characterised in that** the signals containing information on histograms formed in the image processing system are selected from the group consisting of MIN, MAX, NBPTS, RMAX, POSRMAX, MIN being the minimum of an histogram, MAX being the maximum of an histogram, POSRMAX being the position of the maximum of an histogram.

**31.** The apparatus according to any one of claims 26 to 30, **characterised in that** the apparatus is built as a single chip (MOS).

**32.** The apparatus according to any one of claims 26 to 31, **characterised in that** it further comprises a physical link which is a standard automotive bus.

**33.** A device for identifying an object in an input signal, the object comprising pixels in one of a plurality of classes in one of a plurality of domains, said classes being value ranges and said domains being from the group of luminance, hue, saturation, direction, DP, CO and velocity, DP identifying a significant variation of a pixel with respect to the same pixels in one or more images which immediately precede the input image in an image sequence, and CO being an updated time constant to be used for smoothing a pixel value with respect to images which immediately precede the input image in said image sequence, the input signal comprising a succession of frames, each frame comprising a succession of pixels, the device comprising:

a classifier (25b) for each domain, the classifier classifying pixels within each domain in selected classes within the domain;
a linear combination (31) unit for each domain, the linear combination unit generating a validation signal for the domain, of an histogram forming unit the validation signal selecting at least one of the plurality of outputs of classifiers received via a bus (23) of each processing domains;
rotation units for rotating S=2 sets of N >3 predetermined projection axes.
histogram formation units for forming histograms for pixels of the output signal within the classes selected by the classifier (25b) within each domain selected by the validation signal projected onto sets of predetermined projection axes; and
a controller for controlling the classifier, linear combination unit, rotation unit, and histogram formation unit for identifying the object so that said classifiers, linear combination units, and histogram formation units perform in parallel S x N elementary operations for each of said predetermined projection axes.

**34.** The device according to claim 33 wherein the rotation unit performs a Hough transform.

**35.** The device according to claim 33 or 34 wherein the rotation units enable the rotation of a first set of predetermined axes and of a second set of predetermined axes, and wherein the histogram formation units are capable of forming a first of set histograms projected onto the first set of predetermined axis, and of forming a second set of histograms projected onto the second set of predetermined axis.

**36.** The device according to any one of claims 33 to 35 **characterised in that** the object is in an area of an image, and the device further comprises an area selection unit for selecting an area of the image, the histogram formation units forming histograms for pixels of the input signal within the selected area of the image, and the controller further controls the area selection unit for enabling selection of objects in a desired area of an image.

**37.** The device according to any one of claims 33 to 36 **characterised in that** the object is in an area of the image, and the device further comprises a masking unit for masking an area of the image to prevent consideration of the pixels in the masked area, and the controller further controls the masking unit for identifying the object.

**Patentansprüche**

**1.** Verfahren zum Erkennen einer Linie in einem Eingabebild, wobei das Bild eine Vielzahl von Pixeln umfasst, die der Linie entsprechen, wobei das Verfahren eine elementare Operation beinhaltet, umfassend:

- Projizieren von Pixeln auf eine Projektionsachse, die durch einen Drehwinkel bezüglich einer Bezugsachse definiert ist, um eine Projektionswellenform zu bilden;

- Analysieren der Projektionswellenform zum Erkennen von Eigenschaften, die für eine Linie kennzeichnend sind,

- Verarbeiten des Bildes, um Pixel des Bildes auszuwählen, die Eigenschaften aufweisen, die den Eigenschaften der Linie entsprechen, wobei die ausgewählten Pixeleigenschaften wenigstens von der Gruppe sind, die aus Luminanz, Farbton, Sättigung besteht;

**dadurch gekennzeichnet, dass**

- die Projektionswellenform ein Histogramm ist;

- die Gruppe für ausgewählte Pixeleigenschaften des weiteren Richtung, DP, CO und Geschwindigkeit umfasst, wobei DP eine erhebliche Veränderung eines Pixels hinsichtlich derselben Pixel in einem oder mehreren Bildern erkennt, welche unmittelbar dem Eingabebild in einer Bildfolge vorangehen, und wobei CO eine aktualisierte Zeitkonstante ist, die zum Glätten eines Pixelwerts hinsichtlich Bildern, die unmittelbar dem Eingabebild in der Bildfolge vorangehen, verwendet wird;

- und dass N x S elementare Operationen in paralleler Verarbeitung mit den ausgewählten Pixeln auf S =2 Sätzen von N > 3 vorbestimmten Projektionsachsen durchgeführt werden, wobei jeder Satz einen Satz von Bezugsachsen {x, y} betrifft, wobei die N vorbestimmten Projektionsachsen von jedem Satz regelmäßig von dem Satz Bezugsachse mit einem Stufenwinkel von 180°/N verteilt sind;

- und dass, wenn die Analysen der Histogramme eines Satzes eine Linie nicht anzeigen:

  die N vorbestimmten Projektionsachsen des Satzes um einen gleichen Drehwinkel gedreht werden und die elementaren Operationen durchgeführt werden, bis eine Analyse der Histogramme eine Linie anzeigt.

**2.** Verfahren nach Anspruch 1, **dadurch gekennzeichnet, dass** die elementaren Operationen parallel für die S=2 Sätze durchgeführt werden, wobei die Sätze bezüglich {x, y} orthogonalen Bezugsachsen ausgewählt werden.

**3.** Verfahren nach Anspruch 2, **dadurch gekennzeichnet, dass** die Bezugsachsen als die horizontalen und vertikalen Achsen des Bildes ausgewählt werden.

**4.** Verfahren nach Anspruch 1, **dadurch gekennzeichnet, dass** die elementaren Operationen parallel für die S=2 Sätze durchgeführt werden, wobei die Sätze bezüglich {x, y} nichtorthogonalen Bezugsachsen ausgewählt werden.

**5.** Verfahren nach einem der Ansprüche 1 bis 4, **dadurch gekennzeichnet, dass** die elementaren Operationen parallel für die S=2 Sätze von N=16 vordefinierten Projektionsachsen durchgeführt werden.

**6.** Verfahren nach einem der Ansprüche 1 bis 5, **dadurch gekennzeichnet, dass** es des weiteren die Erkennung der Ausrichtung der Linie beinhaltet, wobei das Verfahren des weiteren den Schritt umfasst:

wenn die Analysen der Histogramme eines Satzes nicht eine Linie anzeigen, die am nächsten senkrecht zu einer von N vorbestimmten Projektionsachsen des Satzes ist:

die N vorbestimmten Projektionsachsen des Satzes werden um einen gleichen Drehwinkel gedreht und die elementaren Operationen werden durchgeführt, bis eine Analyse der Histogramme eine Linie anzeigt, die am nächsten senkrecht zu einer von N vorbestimmten Projektionsachsen des Satzes ist.

**7.** Verfahren nach Anspruch 6, **dadurch gekennzeichnet, dass** die Histogrammeigenschaften R = NBPTS/RMAX umfassen und dass die Linie als die am nächsten senkrecht zu der vorbestimmten Projektionsachse bestimmt wird, bei der R ein Minimum ist, wobei NBPTS die Anzahl von Punkten in dem Histogramm ist und RMAX die Anzahl von Punkten bei dem Maximum des Histogramms ist.

**8.** Verfahren nach einem der Ansprüche 1 bis 7, **dadurch gekennzeichnet, dass** eine Kamera an einem Fahrzeug befestigt ist und ein Eingabebild der Straße erhalten wird, um eine Linie auf einer Straße zu erkennen.

**9.** Verfahren nach Anspruch 8, wobei die Linie auf einer Straße eine gestrichelte Linie ist, **dadurch gekennzeichnet, dass** der Schritt des Analysierens des Histogramms zum Erkennen der Eigenschaften, die eine Linie anzeigen, Zeitdurchschnittsbildung des Histogramms über eine Reihe von Einzelbildern des Bildes umfasst.

**10.** Verfahren nach Anspruch 8, wobei die Linie auf einer Straße eine gestrichelte Linie ist, **dadurch gekennzeichnet, dass** der Schritt des Analysierens des Histogramms zum Erkennen der Eigenschaften, die eine Linie anzeigen, Analysieren des Histogramms über eine Reihenfolge von Einzelbildern von dem Bild zum Erkennen einer periodischen Fluktuation der Spitzenwerte des Histogramms, die eine gestrichelte Linie anzeigen, umfasst.

**11.** Verfahren nach Anspruch 8, wobei die Linie eine gestrichelte Linie ist, **dadurch gekennzeichnet, dass** der Schritt des Auswählens von Pixein des Bildes, das Eigenschaften aufweist, die Eigenschaften der Linie entsprechen, Auswählen von Pixeln in einem ersten gewünschten Bereich des Bildes zum Auswählen von Pixeln, die einem ersten Abschnitt der gestrichelten Linie zugeordnet sind, und Auswählen von Pixeln in einem zweiten gewünschten Bereich des Bildes zum Auswählen von Pixeln, die einem zweiten Abschnitt der gestrichelten Linie zugeordnet sind, der benachbart zu dem ersten Abschnitt ist, umfasst; und
dass der Schritt des Bildens von Histogrammen der ausgewählten Pixel, die auf einen ersten Satz von N vorbestimmten Achsen projiziert werden, Bilden eines ersten Satzes von Histogrammen der ausgewählten ersten Pixel, die auf einen ersten Satz von N vorbestimmten Achsen projiziert werden, und Bilden eines zweiten Satzes von Histogrammen der ausgewählten zweiten Pixel, die auf den ersten Satz von N vorbestimmten Achsen projiziert werden, umfasst; und
dass der Schritt des Analysierens des Histogramms zum Erkennen von Eigenschaften, die eine Linie anzeigen, Analysieren des ersten und des zweiten Satzes von Histogrammen über eine Reihe von Einzelbildern des Bildes zum Erkennen einer periodischen Bewegung der ersten Pixel, die der Linie zugeordnet sind, von dem ersten gewünschten Bereich zu dem zweiten gewünschten Bereich umfasst.

**12.** Verfahren nach Anspruch 8, wobei die Linie eine gestrichelte Linie ist, **dadurch gekennzeichnet, dass** der Schritt des Auswählens von Pixeln des Bildes, die Eigenschaften aufweisen, die Eigenschaften der Linie entsprechen, Auswählen von Pixeln in einem ersten gewünschten Bereich des Bildes zum Auswählen von Pixeln, die einem ersten Abschnitt der gestrichelten Linie zugeordnet sind, und Auswählen von Pixeln in einem zweiten gewünschten Bereich des Bildes zum Auswählen von Pixeln, die einem zweiten Abschnitt der gestrichelten Linie zugeordnet sind, der benachbart zu dem ersten Abschnitt ist, umfasst; und
dass der Schritt des Bildens von Histogrammen der ausgewählten Pixel, die auf Sätze von N vorbestimmten Achsen projektiert werden, Bilden eines ersten Satzes von Histogrammen der ausgewählten ersten Pixel, die auf einen ersten Satz von N vorbestimmten Achsen projiziert werden, und Bilden eines zweiten Satzes von Histogrammen der ausgewählten zweiten Pixel, die auf einen zweiten Satz von N vorbestimmten Achsen projiziert werden, umfasst; und
dass der Schritt des Analysierens der Histogramme zum Erkennen von Eigenschaften, die eine Linie anzeigen, Analysieren der Histogramme von dem ersten und zweiten Satz über eine Reihe von Einzelbildern des Bildes zum Erkennen einer periodischen Bewegung der ersten Pixel, die der Linie zugeordnet sind, von dem ersten gewünschten Bereich zu dem zweiten gewünschten Bereich umfasst.

**13.** Verfahren nach einem der Ansprüche 8 bis 12, wobei die Linie eine parallele Doppellinie ist, **dadurch gekennzeichnet, dass** der Schritt des Analysierens des Histogramms zum Erkennen von Eigenschaften, die eine Linie anzeigen, Analysieren des Histogramms zum Erkennen von zwei Spitzeneigenschaften einer parallelen Doppellinie umfasst.

**14.** Verfahren nach einem der Ansprüche 8 bis 12, **dadurch gekennzeichnet, dass** eine Kamera an einem Fahrzeug befestigt ist und ein Eingabebild der Straße erhalten wird, um eine Linie auf einer Straße zu erkennen, die eine Doppellinie ist, und dass der Schritt des Auswählens von Pixeln des Bildes, die Eigenschaften aufweisen, die Eigenschaften der Linie entsprechen, Auswählen von Pixeln in einem ersten gewünschten Bereich des Bildes in einer ersten gewünschten Ausrichtung in dem Bild zum Auswählen von Pixeln, die der ersten Linie zugeordnet sind, und Auswählen von Pixeln in einem zweiten gewünschten Bereich des Bildes in einer zweiten gewünschten Ausrichtung in dem Bild zum Auswählen von Pixeln, die der zweiten Linie zugeordnet sind, umfasst; und
dass der Schritt des Bildens von Histogrammen der ausgewählten Pixel, die auf Sätze von N vorbestimmten Achsen projektiert werden, Bilden eines ersten Satzes von Histogrammen der ausgewählten Pixel, die auf einen ersten Satz von N vorbestimmten Achsen projektiert werden, und Bilden eines zweiten Satzes von Histogrammen der ausgewählten zweiten Pixel, die auf den ersten Satz von vorbestimmten Achsen projektiert werden, umfasst; und
dass der Schritt des Analysierens der Histogramme zum Erkennen von Eigenschaften, die eine Linie anzeigen, Analysieren jedes der Histogramme in dem ersten und zweiten Satz zum Erkennen von Eigenschaften, die eine Linie anzeigen, umfasst; und
dass, wenn die Analyse der Histogramme des ersten Satzes nicht eine Linie anzeigt:

die N vorbestimmten Projektionsachsen des Satzes um einen gleichen Drehungswinkel gedreht werden und die elementaren Operationen durchgeführt werden, bis eine Analyse der Histogramme eine Linie anzeigt.

**15.** Verfahren nach einem der Ansprüche 8 bis 12, **dadurch gekennzeichnet, dass** eine Kamera an einem Fahrzeug befestigt ist und ein Eingabebild der Straße erhalten wird, um eine Linie auf einer Straße zu erkennen, die eine Doppellinie ist, und dass der Schritt des Auswählens von Pixeln des Bildes, die Eigenschaften aufweisen, die Eigenschaften der Linie entsprechen, Auswählen von Pixeln in einem ersten gewünschten Bereich des Bildes in einer ersten gewünschten Ausrichtung in dem Bild zum Auswählen von Pixeln, die der ersten Linie zugeordnet sind, und Auswählen von Pixeln in einem zweiten gewünschten Bereich des Bildes in einer zweiten gewünschten Ausrichtung in dem Bild zum Auswählen von Pixeln, die der zweiten Linie zugeordnet sind, umfasst; und
dass der Schritt des Bildens von Histogrammen der ausgewählten Pixel, die auf Sätze von N vorbestimmten Achsen projiziert werden, Bilden eines ersten Satzes von Histogrammen der ausgewählten ersten Pixel, die auf einen ersten Satz von N vorbestimmten Achsen projektiert werden, und Bilden eines zweiten Satzes von Histogrammen der ausgewählten zweiten Pixel, die auf einen zweiten Satz von vorbestimmten Achsen projiziert werden, umfasst; und
dass der Schritt des Analysierens der Histogramme zum Erkennen von Eigenschaften, die eine Linie anzeigen, Analysieren von Histogrammen von ersten und zweiten Sätzen zum Erkennen von Eigenschaften, die eine Linie anzeigen, umfasst; und
dass, wenn die Analyse der Histogramme eines Satzes nicht eine Linie anzeigt, die N vorbestimmten Projektionsachsen des Satzes um einen gleichen Drehwinkel gedreht werden und die elementaren Operationen durchgeführt werden, bis eine Analyse der Histogramme eine Linie anzeigt.

**16.** Verfahren nach einem der Ansprüche 8 bis 15, **dadurch gekennzeichnet, dass** eine Kamera an einem Fahrzeug befestigt ist und ein Eingabebild der Straße erhalten wird, um eine Fahrspur auf einer Straße von der am Fahrzeug befestigten Kamera festzustellen, wobei die Fahrspur durch eine erste Linie auf einer Seite davon und eine zweite Linie auf der anderen Seite davon definiert wird, wobei das Verfahren die Schritte umfasst:

Erhalten eines Bildes der Straße von der Kamera, wobei jede der ersten und zweiten Seitenlinien eine Vielzahl von Pixeln in dem Bild umfasst;

Auswählen von Pixeln des Bildes in einem ersten gewünschten Bereich des Bildes in einer ersten gewünschten Ausrichtung in dem Bild zum Auswählen von Pixeln, die der ersten Seitenlinie zugeordnet sind, und Auswählen von Pixeln in einem zweiten gewünschten Bereich des Bildes in einer zweiten gewünschten Ausrichtung in dem Bild zum Auswählen von Pixeln, die der zweiten Seitenlinie zugeordnet sind; und

Erkennen der ersten Seitenlinie und der zweiten Seitenlinie.

**17.** Verfahren nach Anspruch 16, **dadurch gekennzeichnet, dass** eine Kamera an einem Fahrzeug befestigt ist und ein Eingabebild der Straße erhalten wird, um ein Fahrzeug in einer benachbarten Fahrspur von einer Kamera, die an einem Gegenstandsfahrzeug befestigt ist, festzustellen, wobei die benachbarte Fahrspur durch eine erste Linie auf der einen Seite davon und eine zweite Linie auf der anderen Seite davon definiert wird, wobei das Verfahren die Schritte umfasst:

Erhalten eines Bildes der Straße von der Kamera, wobei jede der ersten und zweiten Seitenlinien eine Vielzahl von Pixeln in dem Bild umfasst;

Feststellen einer benachbarten Fahrspur durch Erkennen der ersten Seitenlinie und der zweiten Seitenlinie der benachbarten Fahrspur;

Auswählen von Pixeln des Bildes, die Eigenschaften aufweisen, die Eigenschaften eines Fahrzeugs entsprechen, durch Auswählen solcher Pixel in einem Bereich, der durch die erste und zweite Seitenlinie begrenzt wird;

Bilden eins Histogramms der ausgewählten Pixel, die auf einen ersten Satz von vorbestimmten Achsen projektiert werden; und

Analysieren des Histogramms zum Feststellen von Eigenschaften, die ein Fahrzeug anzeigen.

**18.** Verfahren nach Anspruch 17, **dadurch gekennzeichnet, dass** der Schritt des Analysierens des Histogramms zum Feststellen von Eigenschaften, die ein Fahrzeug anzeigen. Feststellen eines Histogramms umfasst, das NBPTS aufweist, das eine Schwelle überschreitet, wobei NBPTS die Anzahl von Punkten in dem Histogramm ist.

**19.** Verfahren nach Anspruch 17 oder 18, **dadurch gekennzeichnet, dass** der Schritt des Auswählens von Pixeln des Bildes, die Eigenschaften aufweisen, die Eigenschaften eines Fahrzeugs entsprechen, Auswählen von Pixeln, die eine Farb- oder Luminanzeigenschaft aufweisen, die charakteristisch für Rücklichter ist, umfasst.

**20.** Verfahren nach Anspruch 19, **dadurch gekennzeichnet, dass** das Analysieren des Histogramms zum Feststellen von Eigenschaften, die ein Fahrzeug anzeigen, Analysieren des Histogramms zum getrennten Feststellen jedes Rücklichts umfasst.

**21.** Verfahren nach Anspruch 17 oder 18, **dadurch gekennzeichnet, dass** der Schritt des Auswählens von Pixeln des Bildes, die Eigenschaften aufweisen, die Eigenschaften eines Fahrzeugs entsprechen, Auswählen von Pixeln, die eine Farb- oder Luminanzeigenschaft aufweisen, die charakteristisch für Vorderlichter ist, umfasst.

**22.** Verfahren nach Anspruch 21, **dadurch gekennzeichnet, dass** Analysieren des Histogramms zum Feststellen von Eigenschaften, die ein Fahrzeug anzeigen, Analysieren des Histogramms zum getrennten Feststellen von jedem Vorderlicht umfasst.

**23.** Verfahren nach einem der Ansprüche 17 bis 22, **dadurch gekennzeichnet, dass** der Schritt des Auswählens von Pixeln des Bildes, die Eigenschaften aufweisen, die Eigenschaften eines Fahrzeugs entsprechen, Auswählen von Pixeln, die sich in einer Richtung parallel zu einer Richtung der benachbarten Fahrspur bewegen, umfasst.

**24.** Verfahren nach einem der Ansprüche 17 bis 23, **dadurch gekennzeichnet, dass** der Schritt des Auswählens von Pixeln des Bildes, die Eigenschaften aufweisen, die Eigenschaften eines Fahrzeuges entsprechen, Auswählen von Pixeln, die sich in einer im Allgemeinen zu einer der ersten und zweiten Seitenlinien parallelen Richtung bewegen, umfasst.

**25.** Verfahren nach einem der Ansprüche 17 bis 22, **dadurch gekennzeichnet, dass** es den Schritt des dynamischen Anpassens in Abhängigkeit von Ergebnissen wenigstens eines oder mehrerer der folgenden Parameter umfasst: Klassifizierung, Bereiche, Histogramme.

**26.** Vorrichtung zum Erkennen der Ausrichtung einer Linie in einem Eingabebild, wobei die Linie eine Vielzahl von Pixeln umfasst, wobei die Vorrichtung Mittel aufweist zum:

- Projizieren von Pixeln auf eine Projektionsachse, die durch einen Drehwinkel bezüglich einer Bezugsachse definiert ist, um eine Projektionswellenform zu bilden;

- Analysieren der Projektionswellenform zum Erkennen von Eigenschaften, die für eine Linie kennzeichnend sind;

- Verarbeiten des Bildes, um Pixel des Bildes auszuwählen, die Eigenschaften aufweisen, die Eigenschaften der Linie entsprechen, wobei die ausgewählten Pixeleigenschaften am besten aus der Gruppe sind, die aus Luminanz, Farbton, Sättigung besteht;

**dadurch gekennzeichnet, dass** die Projektionswellenform ein Histogramm ist, wobei die Gruppe von ausgewählten Pixeleigenschaften des weiteren Richtung, DP, CO und Geschwindigkeit umfasst, wobei DP eine erhebliche Veränderung eines Pixels hinsichtlich derselben Pixel in einem oder mehreren Bildern erkennt, welche unmittelbar dem Eingabebild in einer Bildfolge vorangehen, und wobei CO eine aktualisierte Zeitkonstante ist, die zum Glätten eines Pixelwerts hinsichtlich Bildern, die unmittelbar dem Eingabebild in der Bildfolge vorangehen, verwendet wird, und dass sie ein Bildverarbeitungssystem umfasst, das über eine Schnittstelle an eine Steuereinheit angeschlossen ist, die Histogrammbildungseinheiten und Dreheinheiten für S = 2 Sätze von N > 3 vorbestimmten Projektionsachsen umfasst, wobei jeder Satz einen Satz von Bezugsachsen {x, y} betrifft, wobei die Histogrammbildungseinheiten Histogramme von den Pixeln bilden, die auf die vorbestimmten Projektionsachsen von Sätzen projektiert werden, und die Dreheinheiten die vorbestimmten Projektionsachsen von Sätzen um einen gleichen Drehwinkel drehen; wobei

- der Regler die Histogramme analysiert, um zu bestimmen, wann die Histogramme von einem Satz Eigenschaften umfassen, die anzeigen, dass die Linie am nächsten senkrecht zu einer der vorbestimmten Achsen des Satzes ist, und

- die Steuereinheit fähig ist, die N vorbestimmten Achsen eines Satzes durch die Dreheinheiten zu drehen und parallele S x N elementare Operationen durchzuführen, die die Schritte des Projizierens, Analysierens und Verarbeitens umfassen.

**27.** Vorrichtung nach Anspruch 26, **dadurch gekennzeichnet, dass** die Dreheinheit eine Hough-Transformationseinheit umfasst, die eine Hough-Tranformation auf den Pixeln durchführt, um eine Drehung der vorbestimmten Achse zu ermöglichen.

**28.** Vorrichtung nach Anspruch 26 oder 27, **dadurch gekennzeichnet, dass** jede Histogrammbildungseinheit einen Bereichsauswahlspeicher zum Auswählen eines Bereichs, für den ein Histogramm zu bilden ist, umfasst, wobei die Steuereinheit die Histogrammbildungseinheit zum Auswählen von Pixeln in einem gewünschten Bereich des Bildes zum Feststellen der Linie steuert.

**29.** Vorrichtung nach einem der Ansprüche 26 bis 28, **dadurch gekennzeichnet, dass** die Schnittstelle zwischen dem Bildverarbeitungssystem und der Steuereinheit umfasst:

Eingabesignale von der Steuereinheit zu dem Bildverarbeitungssystem, einschließlich Steuersignale, die aus der Gruppe ausgewählt sind, bestehend aus:

i) Signalen zum Auswählen von Domänen zum Verarbeiten durch das Bildverarbeitungssystem, wobei die Domänen aus der Gruppe ausgewählt sind, die aus Luminanz, Farbton, Sättigung, CO, DP, Richtung und Geschwindigkeit besteht;

ii) Signalen zum Auswählen von Klassen von Pixeln innerhalb jeder Domäne zum Verarbeiten durch das Bildverarbeitungssystem,

iii) Signalen zum Auswählen des Drehwinkels von Sätzen zur Bildung von Histogrammen, die auf die vordefinierten Achsen der Sätze projektiert werden, und

iv) Signalen zum Auswählen eines Bereichs eines Bildes zum Verarbeiten durch das Bildverarbeitungssystem; und

Ausgabesignalen von dem Bildverarbeitungssystem zu der Steuereinheit, einschließlich Signale, die vom Verarbeiten der Eingabesignale resultieren, die aus der Gruppe ausgewählt sind, bestehend aus:

I) Signalen, die Informationen zu Histogrammen, die in dem Bildverarbeitungssystem gebildet wurden, enthalten, und

II) Signalen, die Histogramme enthalten, die in dem Bildverarbeitungssystem gebildet wurden.

**30.** Vorrichtung nach Anspruch 29, **dadurch gekennzeichnet, dass** die Signale, die Informationen zu Histogrammen enthalten, die in dem Bildverarbeitungssystem gebildet wurden, aus der Gruppe ausgewählt werden, die aus MIN, MAX, NBPTS, RMAX, POSRMAX besteht, wobei MIN das Minimum eines Histogramms ist, MAX das Maximum eines Histogramms ist, und POSRMAX die Position des Maximums eines Histogramms ist.

**31.** Vorrichtung nach einem der Ansprüche 26 bis 30, **dadurch gekennzeichnet, dass** die Vorrichtung als ein Einchip (MOS) ausgebildet ist.

**32.** Vorrichtung nach einem der Ansprüche 26 bis 31, **dadurch gekennzeichnet, dass** sie des weiteren eine physikalische Verbindung umfasst, die ein Standardkraftfahrzeugbus ist.

**33.** Vorrichtung zum Erkennen eines Objektes in einem Eingabesignal, wobei das Objekt Pixel in einer von einer Vielzahl von Klassen in einer von einer Vielzahl von Domänen umfasst, wobei die Klassen Wertbereiche sind und die Domänen aus der Gruppe Luminanz, Farbton, Sättigung, CO, DP, Richtung und Geschwindigkeit sind, wobei DP eine erhebliche Veränderung eines Pixels hinsichtlich derselben Pixel in einem oder mehreren Bildern erkennt, welche unmittelbar dem Eingabebild in einer Bildfolge vorangehen, und wobei CO eine aktualisierte Zeitkonstante ist, die zum Glätten eines Pixelwerts hinsichtlich Bildern, die unmittelbar dem Eingabebild in der Bildfolge vorangehen, verwendet wird, wobei das Eingabesignal eine Reihenfolge von Einzelbildern umfasst, wobei jedes Einzelbild eine Reihenfolge von Pixeln umfasst, wobei die Vorrichtung umfasst:

einen Klassifizierer (25b) für jede Domäne, wobei der Klassifizierer Pixel innerhalb jeder Domäne in ausgewählten Klassen innerhalb der Domäne klassifiziert;

eine lineare Kombinationseinheit (31) für jede Domäne, wobei die lineare Kombinationseinheit ein Validationssignal für die Domäne von einer Histogrammbildungseinheit erzeugt, wobei das Validationssignal wenigstens eine der Vielzahl von Ausgaben von Klassifizierern auswählt, die über einen Bus (23) von jeder Verarbeitungsdomäne empfangen werden;

Dreheinheiten zum Drehen von S=2 Sätzen von N >3 vorbestimmten Projektionsachsen;

Histogrammbildungseinheiten zum Bilden von Histogrammen für Pixel des Ausgabesignals innerhalb der Klassen, die durch den Klassifizierer (25b) innerhalb jeder Domäne ausgewählt wurden, die durch das Validationssignal ausgewählt wurde, das auf Sätze von vorbestimmten Projektionsachsen projiziert wird; und

eine Steuereinheit zum Steuern des Klassifizierers, der linearen Kombinationseinheit, der Dreheinheit und der Histogrammbildungseinheit, um das Objekt zu erkennen, so dass die Klassifizierer, linearen Kombinationseinheiten und Histogrammbildungseinheiten parallele S x N elementare Operationen für jede der vorbestimmten Projektionsachsen durchführen.

**34.** Vorrichtung nach Anspruch 33, wobei die Dreheinheit eine Hough-Transformation durchführt.

**35.** Vorrichtung nach Anspruch 33 oder 34, wobei die Dreheinheiten die Drehung eines ersten Satzes von vorbestimmten Achsen und eines zweiten Satzes von vorbestimmten Achsen ermöglichen und wobei die Histogrammbildungseinheiten fähig sind, einen ersten Satz von Histogrammen zu bilden, der auf den ersten Satz von vorbestimmten Achsen projiziert wird, und um einen zweiten Satz von Histogrammen zu bilden, der auf den zweiten Satz von vorbestimmten Achsen projiziert wird.

**36.** Vorrichtung nach einem der Ansprüche 33 bis 35, **dadurch gekennzeichnet, dass** das Objekt in einem Bereich eines Bildes ist und die Vorrichtung des weiteren eine Bereichsauswahleinheit zum Auswählen eines Bereichs des Bildes umfasst, wobei die Histogrammbildungseinheiten Histogramme für Pixel des Eingabesignals innerhalb des ausgewählten Bereichs des Bildes bilden und die Steuereinheit des weiteren die Bereichsauswahleinheit steuert, um eine Auswahl von Objekten in einem gewünschten Bereich eines Bildes zu ermöglichen.

**37.** Vorrichtung nach einem der Ansprüche 33 bis 36, **dadurch gekennzeichnet, dass** das Objekt in einem Bereich des Bildes ist und die Vorrichtung des weiteren eine Ausblendungseinheit zum Ausblenden eines Bereichs des Bildes umfasst, um zu verhindern, dass die Pixel in dem ausgeblendeten Bereich berücksichtigt werden, und die Steuereinheit des weiteren die Ausblendungseinheit zum Erkennen des Objektes steuert.

## Revendications

**1.** Procédé d'identification d'une ligne dans une image d'entrée, l'image comportant une multiplicité d'éléments d'image correspondant à la ligne, le procédé comprenant une opération élémentaire comportant :

- la projection des éléments d'image sur un axe de projection défini par un angle de rotation lié à un axe de référence, de façon à former une courbe de projection;
- l'analyse de la courbe de projection afin d'identifier des caractéristiques indicatives d'une ligne;
- l'image est traitée afin de sélectionner des éléments d'image de l'image ayant des caractéristiques correspondant aux caractéristiques de la ligne, les caractéristiques d'élément d'image sélectionné provenant au moins du groupe composé de la luminance, de la teinte, de la saturation;

**caractérisé en ce que**

- la courbe de projection est un histogramme ;
- le groupe pour les caractéristiques d'éléments d'image sélectionné comporte en outre la direction, DP, CO et la vitesse, DP identifiant une variation significative d'un élément d'image par rapport aux mêmes éléments d'image dans une ou plusieurs images qui précèdent immédiatement l'image d'entrée dans une séquence d'image, et CO étant une constante de temps mise à jour devant être utilisée afin de lisser une valeur d'élément d'image par rapport aux images qui précèdent immédiatement l'image d'entrée dans ladite séquence d'image;
- et **en ce que** N x S opérations élémentaires sont réalisées dans un traitement parallèle avec les éléments d'image sélectionnés sur S = 2 ensembles de N > 3 axes de projection prédéterminés, chaque ensemble étant lié à un ensemble d'axes de référence {x,y}, les N axes de projection prédéterminés de chaque ensemble étant régulièrement répartis depuis l'axe de référence d'ensemble avec un angle de pas de 180°/N;
- et **en ce que**, si les analyses des histogrammes d'un ensemble ne sont pas indicatives d'une ligne,

les N axes de projection prédéterminés dudit ensemble sont tournés avec un même angle de rotation et les opérations élémentaires sont réalisées jusqu'à ce qu'une analyse des histogrammes soit indicative d'une ligne.

**2.** Procédé selon la revendication 1, **caractérisé en ce que** les opérations élémentaires sont réalisées en parallèle pour les S = 2 ensembles, les ensembles étant choisis liés à des axes de référence orthogonaux {x,y}.

**3.** Procédé selon la revendication 2, **caractérisé en ce que** les axes de référence sont choisis en tant qu'axes horizontaux et verticaux de l'image.

**4.** Procédé selon la revendication 1, **caractérisé en ce que** les opérations élémentaires sont réalisées en parallèle pour les S = 2 ensembles, les ensembles étant choisis liés à des axes de référence non orthogonaux {x,y}.

**5.** Procédé selon l'une quelconque des revendications 1 à 4, **caractérisé en ce que** les opérations élémentaires sont réalisées en parallèle pour les S = 2 ensembles de N = 16 axes de projection prédéfinis.

**6.** Procédé selon l'une des revendications 1 à 5, **caractérisé en ce qu'**il comporte en outre l'identification de l'orientation de la ligne, le procédé comportant en outre l'étape de :

si les analyses des histogrammes d'un ensemble ne sont pas indicatives d'une ligne pratiquement perpendiculaire à un des N axes de projection prédéterminés dudit ensemble:

les N axes de projection prédéterminés dudit ensemble sont tournés avec un même angle de rotation et les opérations élémentaires sont réalisées jusqu'à ce qu'une analyse des histogrammes soit indicative d'une ligne pratiquement perpendiculaire à l'un des N axes de projection prédéterminés dudit ensemble.

7. Procédé selon la revendication 6, **caractérisé en ce que** les caractéristiques d'histogramme comportent R = NBPTS/RMAX, et **en ce que** la ligne est déterminée pour être pratiquement perpendiculaire à l'axe de projection prédéterminé où R est un minimum, NBPTS étant le nombre de points dans l'histogramme et RMAX étant le nombre de points au maximum de l'histogramme.

8. Procédé selon l'une des revendications 1 à 7, **caractérisé en ce qu'**une caméra est montée sur un véhicule et une image d'entrée de la route est captée afin d'identifier une ligne sur une route.

9. Procédé selon la revendication 8, dans lequel la ligne sur une route est une ligne discontinue, **caractérisé en ce que** l'étape d'analyse de l'histogramme afin d'identifier des caractéristiques indicatives d'une ligne comporte la moyenne dans le temps de l'histogramme sur une succession de vues de l'image.

10. Procédé selon la revendication 8, dans lequel la ligne sur une route est une ligne discontinue, **caractérisé en ce que** l'étape d'analyse de l'histogramme afin d'identifier des caractéristiques indicatives d'une ligne comporte l'analyse de l'histogramme sur une succession de vues de l'image de façon à identifier une fluctuation périodique dans des crêtes de l'histogramme indicatives d'une ligne discontinue.

11. Procédé selon la revendication 8, dans lequel la ligne est une ligne discontinue, **caractérisé en ce que** l'étape de sélection des éléments d'image de l'image ayant des caractéristiques correspondant aux caractéristiques de la ligne comporte la sélection d'éléments d'image dans une première zone souhaitée de l'image afin de sélectionner des éléments d'image associés à une première partie de la ligne discontinue, et la sélection des éléments d'image dans une deuxième zone souhaitée de l'image afin de sélectionner des éléments d'image associés à une deuxième partie de la ligne discontinue adjacente à la première section; et

    **en ce que** l'étape de formation des histogrammes des éléments d'image sélectionnés projetés sur un premier ensemble de N axes prédéterminés comporte la formation d'un premier ensemble d'histogrammes des premiers éléments d'image sélectionnés projetés sur un premier ensemble de N axes prédéterminés et de formation d'un deuxième ensemble d'histogrammes des deuxièmes éléments d'image sélectionnés projetés sur le premier ensemble de N axes prédéterminés; et

    **en ce que** l'étape d'analyse de l'histogramme afin d'identifier des caractéristiques indicatives d'une ligne comporte l'analyse des premier et deuxième ensembles d'histogrammes sur une succession de vues de l'image afin d'identifier un mouvement périodique des premiers éléments d'image associés à la ligne depuis la première zone souhaitée jusqu'à la deuxième zone souhaitée.

12. Procédé selon la revendication 8, dans lequel la ligne est une ligne discontinue, **caractérisé en ce que** l'étape de sélection des éléments d'image de l'image ayant des caractéristiques correspondant aux caractéristiques de la ligne comporte la sélection des éléments d'image dans une première zone souhaitée de l'image afin de sélectionner des éléments d'image associés à une première partie de la ligne discontinue, et la sélection des éléments d'image dans une deuxième zone souhaitée de l'image afin de sélectionner des éléments d'image associés à une deuxième partie de la ligne discontinue adjacente à la première section; et

    **en ce que** l'étape de formation des histogrammes des éléments d'image sélectionnés projetés sur des ensembles de N axes prédéterminés comporte la formation d'un premier ensemble d'histogrammes des premiers éléments d'image sélectionnés projetés sur un premier ensemble de N axes prédéterminés et la formation d'un deuxième ensemble d'histogrammes des deuxièmes éléments d'image sélectionnés projetés sur un deuxième ensemble de N axes prédéterminés; et

    **en ce que** l'étape d'analyse des histogrammes afin d'identifier des caractéristiques indicatives d'une ligne comporte l'analyse des histogrammes des premier et deuxième ensembles sur une succession de vues de l'image afin d'identifier un mouvement périodique des premiers éléments d'image associés à la ligne depuis la première zone souhaitée jusqu'à la deuxième zone souhaitée.

13. Procédé selon l'une quelconque des revendications 8 à 12, dans lequel la ligne est une ligne double parallèle, **caractérisé en ce que** l'étape d'analyse de l'histogramme afin d'identifier des caractéristiques indicatives d'une ligne comporte l'analyse de l'histogramme de façon à identifier deux crêtes caractéristiques d'une ligne double parallèle.

14. Procédé selon l'une quelconque des revendications 8 à 12, **caractérisé en ce qu'**une caméra est montée sur un véhicule et une image d'entrée de la route est captée afin d'identifier une ligne sur une route qui est une ligne double et **en ce que** l'étape de sélection des éléments d'image de l'image ayant des caractéristiques correspondant aux caractéristiques de la ligne comporte la sélection des éléments d'image dans une première zone souhaitée de l'image dans une première orientation souhaitée dans l'image afin de sélectionner des éléments d'image associés à la première ligne, et la sélection des éléments d'image dans une deuxième zone souhaitée de l'image dans une deuxième orientation souhaitée dans l'image afin de sélectionner des éléments d'image associés à la deuxième ligne; et

**en ce que** l'étape de formation des histogrammes des éléments d'image sélectionnés projetés sur des ensembles de N axes prédéterminés comporte la formation d'un premier ensemble d'histogrammes des premiers éléments d'image sélectionnés projetés sur un premier ensemble de N axes prédéterminés et la formation d'un deuxième ensemble d'histogrammes des deuxièmes éléments d'image sélectionnés projetés sur le premier ensemble d'axes prédéterminés; et

**en ce que** l'étape d'analyse des histogrammes afin d'identifier des caractéristiques indicatives d'une ligne comporte l'analyse de chacun des histogrammes dans les premier et deuxième ensembles de façon à identifier des caractéristiques indicatives d'une ligne; et

**en ce que**, si l'analyse des histogrammes du premier ensemble n'est pas indicative d'une ligne;

les N axes de projection prédéterminés dudit ensemble sont tournés avec un même angle de rotation et les opérations élémentaires sont réalisées jusqu'à ce qu'une analyse des histogrammes soit indicative d'une ligne.

**15.** Procédé selon l'une quelconque des revendications 8 à 12, **caractérisé en ce qu'**une caméra est montée sur un véhicule et une image d'entrée de la route est saisie afin d'identifier une ligne sur une route qui est une ligne double et **en ce que** l'étape de sélection des éléments d'image de l'image ayant des caractéristiques correspondant aux caractéristiques de la ligne comporte la sélection des éléments d'image dans la première zone souhaitée de l'image dans une première orientation souhaitée dans l'image afin de sélectionner des éléments d'image associés à la première ligne, et la sélection des éléments d'image dans une deuxième zone souhaitée de l'image dans une deuxième orientation souhaitée dans l'image afin de sélectionner des éléments d'image associés à la deuxième ligne; et

**en ce que** l'étape de formation des histogrammes des éléments d'image sélectionnés projetés sur des ensembles de N axes prédéterminés comporte la formation d'un premier ensemble d'histogrammes des premiers éléments d'image sélectionnés projetés sur un premier ensemble de N axes prédéterminés et la formation d'un deuxième ensemble d'histogrammes des deuxièmes éléments d'image sélectionnés projetés sur un deuxième ensemble d'axes prédéterminés; et

**en ce que** l'étape d'analyse des histogrammes afin d'identifier des caractéristiques indicatives d'une ligne comporte l'analyse des histogrammes de premier et deuxième ensembles de façon à identifier des caractéristiques indicatives d'une ligne; et

**en ce que**, si l'analyse des histogrammes d'un ensemble n'est pas indicative d'une ligne, les N axes de projection prédéterminés dudit ensemble sont tournés avec un même angle de rotation et les opérations élémentaires sont réalisées jusqu'à ce qu'une analyse des histogrammes soit indicative d'une ligne.

**16.** Procédé selon l'une quelconque des revendications 8 à 15, **caractérisé en ce qu'**une caméra est montée sur un véhicule et une image d'entrée de la route est saisie afin de détecter une voie sur une route avec la caméra montée sur le véhicule, la voie étant définie par une première ligne sur un côté de celle-ci et une deuxième ligne de l'autre côté de celle-ci, le procédé comportant les étapes de:

saisie d'une image de la route avec la caméra, chacune des première et deuxième lignes latérales comportant une multiplicité d'éléments d'image dans l'image;
sélection des éléments d'image de l'image dans une première zone souhaitée de l'image dans une première orientation souhaitée dans l'image, et la sélection des éléments d'image dans une deuxième zone souhaitée de l'image dans une deuxième orientation souhaitée dans l'image afin de sélectionner des éléments d'image associés à la deuxième ligne latérale; et
identifier la première ligne latérale et la deuxième ligne latérale.

**17.** Procédé selon la revendication 16, **caractérisé en ce qu'**une caméra est montée sur un véhicule et une image d'entrée de la route est saisie afin de détecter un véhicule dans une voie adjacente à partir d'une caméra montée dans un véhicule concerné, la voie adjacente étant définie par une première ligne d'un côté de celle-ci et une deuxième ligne de l'autre côté de celle-ci, le procédé comportant les étapes de :

saisie d'une image de la route avec la caméra, chacune des première et deuxième lignes latérales comportant une multiplicité d'éléments d'image dans l'image;

détection d'une voie adjacente en identifiant la première ligne latérale et la deuxième ligne latérale de ladite voie adjacente;
sélection des éléments d'image de l'image ayant des caractéristiques correspondant aux caractéristiques d'un véhicule, en sélectionnant de tels éléments d'image dans une zone délimitée par les première et deuxième lignes latérales;
formation d'un histogramme des éléments d'image sélectionnés projetés sur un premier ensemble d'axes prédéterminés; et
analyse de l'histogramme afin de détecter des caractéristiques indicatives d'un véhicule.

**18.** Procédé selon la revendication 17, **caractérisé en ce que** l'étape d'analyse de l'histogramme afin de détecter les caractéristiques indicatives d'un véhicule comporte la détection d'un histogramme ayant NBPTS dépassant un seuil, NBPTS étant le nombre de points dans l'histogramme.

**19.** Procédé selon la revendication 17 ou 18, **caractérisé en ce que** l'étape de sélection des éléments d'image de l'image ayant des caractéristiques correspondant aux caractéristiques d'un véhicule comporte la sélection des éléments d'image ayant une caractéristique de couleur ou de luminance des feux arrière.

**20.** Procédé selon la revendication 19 analysant l'histogramme afin de détecter des caractéristiques indicatives d'un véhicule, qui comporte l'analyse de l'histogramme afin de détecter séparément chaque feu arrière.

**21.** Procédé selon la revendication 17 ou 18, **caractérisé en ce que** l'étape de sélection des éléments d'image de l'image ayant des caractéristiques correspondant aux caractéristiques d'un véhicule comporte la sélection des éléments d'image ayant une caractéristique de couleur ou de luminance des phares.

**22.** Procédé selon la revendication 21 analysant l'histogramme afin de détecter des caractéristiques indicatives d'un véhicule, qui comporte l'analyse de l'histogramme afin de détecter séparément chaque phare.

**23.** Procédé selon l'une des revendications 17 à 22, **caractérisé en ce que** l'étape de sélection des éléments d'image de l'image ayant des caractéristiques correspondant aux caractéristiques d'un véhicule comporte la sélection des éléments d'image se déplaçant dans une direction parallèle à une direction de la voie adjacente.

**24.** Procédé selon l'une des revendications 17 à 23, **caractérisé en ce que** l'étape de sélection des éléments d'image de l'image ayant des caractéristiques correspondant aux caractéristiques d'un véhicule comporte la sélection des éléments d'image se déplaçant une direction globalement parallèle à une des première et deuxième lignes.

**25.** Procédé selon l'une des revendications 17 à 22, **caractérisé en ce qu'**il comporte l'étape d'adaptation dynamique en fonction des résultats d'au moins un ou plusieurs des paramètres suivants : catégorie, zones, histogrammes.

**26.** Appareil destiné à identifier l'orientation d'une ligne dans une image d'entrée, la ligne comportant une multiplicité d'éléments d'image, ledit appareil ayant des moyens pour :

- la projection des éléments d'image sur un axe de projection défini par un angle de rotation lié à un axe de référence, de façon à former une courbe de projection;
- l'analyse de la courbe de projection afin d'identifier des caractéristiques indicatives d'une ligne;
- le traitement d'image afin de sélectionner des éléments d'image de l'image ayant des caractéristiques correspondant aux caractéristiques de la ligne, les caractéristiques d'élément d'image sélectionné provenant au mieux du groupe composé de la luminance, de teinte, de la saturation;

**caractérisé en ce que** la courbe de projection est un histogramme, le groupe de caractéristiques d'élément d'image sélectionné comporte en outre la direction, DP, CO et la vitesse, DP identifiant une variation significative d'un élément d'image par rapport aux mêmes éléments d'image dans une ou plusieurs images qui précèdent immédiatement l'image d'entrée dans une séquence d'image, et CO étant une constante de temps mise à jour devant être utilisée afin de lisser une valeur d'élément d'image par rapport aux images qui précèdent immédiatement l'image d'entrée dans ladite séquence d'image, et **en ce qu'**il comporte un système de traitement d'image interfacé avec un circuit de commande comportant des unités de formation d'histogramme et des unités de rotation pour S = 2 ensembles de N > 3 axes de projection prédéterminés, chaque ensemble étant lié à un ensemble d'axes de référence {x,y}, lesdites unités de formation d'histogramme formant des histogrammes des éléments d'image projetés sur les axes de projection prédéterminés des ensembles, et lesdites unités de rotation tournant d'un même angle de rotation les axes de projection prédéterminés des ensembles;

- le circuit de commande analysant les histogrammes afin de déterminer quand les histogrammes d'un ensemble comportent des caractéristiques indiquant que la ligne est pratiquement perpendiculaire à un des axes prédéterminés dudit ensemble, et
- le circuit de commande pouvant faire tourner le N axe prédéterminé d'un ensemble par l'intermédiaire des unités de rotation et réaliser en parallèle S x N opérations élémentaires comportant lesdites étapes de projection, d'analyse et de traitement.

**27.** Appareil selon la revendication 26, **caractérisé en ce que** l'unité de rotation comporte une unité de transformation de Hough exécutant une transformée de Hough sur les éléments d'image pour permettre la rotation de l'axe prédéterminé.

**28.** Appareil selon la revendication 26 ou 27, **caractérisé en ce que** chaque unité de formation d'histogramme comporte une mémoire de sélection de zone afin de sélectionner une zone d'une image pour laquelle il faut former un histogramme, le circuit de commande commandant l'unité de formation d'histogramme afin de sélectionner des éléments d'image dans une zone souhaitée de l'image de façon à détecter la ligne.

**29.** Appareil selon l'une quelconque des revendications 26 à 28, **caractérisé en ce que** l'interface entre le système de traitement d'image et le circuit de commande comporte :

l'entrée de signaux provenant du circuit de commande dans le système de traitement d'image comprenant des signaux de commande choisis dans le groupe composé de :

i) des signaux destinés à sélectionner des domaines pour le traitement par le système de traitement d'image, lesdits domaines étant sélectionnés dans le groupe composé de la luminance, de la teinte, de la saturation, CO, DP, la direction, et la vitesse;
ii) des signaux destinés à sélectionner des classes d'éléments d'image dans chaque domaine pour le traitement par le système de traitement d'image,
iii) des signaux destinés à sélectionner l'angle de rotation des ensembles pour la formation des histogrammes projetés sur les axes prédéfinis des ensembles, et
iv) des signaux destinés à sélectionner une zone d'une image pour le traitement par le système de traitement d'image; et

la sortie de signaux du système de traitement d'image vers le circuit de commande comprenant des signaux résultant du traitement des signaux d'entrée choisis dans le groupe composé de :

i) des signaux contenant de l'information sur des histogrammes formés dans le système de traitement d'image, et
ii) des signaux contenant des histogrammes formés dans le système de traitement d'image.

**30.** Appareil selon la revendication 29, **caractérisé en ce que** les signaux contenant de l'information sur des histogrammes formés dans le système de traitement d'image sont sélectionnés dans le groupe de MIN, MAX, NBPTS, RMAX, POSRMAX, MIN étant le minimum d'un histogramme, MAX étant le maximum d'un histogramme, POSRMAX étant la position du maximum d'un histogramme.

**31.** Appareil selon l'une quelconque des revendications 26 à 30, **caractérisé en ce que** l'appareil est construit sous la forme d'un unique circuit (MOS).

**32.** Appareil selon l'une quelconque des revendications 26 à 31, **caractérisé en ce qu'**il comporte en outre une liaison physique qui est un bus automobile standard.

**33.** Dispositif destiné à identifier un objet dans un signal d'entrée, l'objet comportant des éléments d'image dans une classe d'une multiplicité de classes dans un domaine d'une multiplicité de domaines, lesdites classes étant des plages de valeur et lesdits domaines étant du groupe de luminance, teinte, saturation, direction, DP, CO et vitesse, DP identifiant une variation significative d'un élément d'image par rapport aux mêmes éléments d'image dans une ou plusieurs images qui précèdent immédiatement l'image d'entrée dans une séquence d'image, et CO étant une constante de temps mise à jour devant être utilisée afin de lisser une valeur d'élément d'image par rapport aux images qui précèdent immédiatement l'image d'entrée dans ladite séquence d'image, le signal d'entrée comportant une succession de vues, chaque vue comportant une succession d'éléments d'image, le dispositif comportant :

un dispositif de classification (25b) pour chaque domaine, le dispositif de classification classifiant des éléments d'image dans chaque domaine dans les classes sélectionnées dans le domaine;
une unité de combinaison linéaire (31) pour chaque domaine, l'unité de combinaison linéaire générant un signal de validation pour le domaine d'une unité de formation d'histogramme, le signal de validation sélectionnant au moins une sortie de la multiplicité de sorties de dispositifs de classification reçues par l'intermédiaire d'un bus (23) de chaque domaine de traitement;
des unités de rotation destinées à faire tourner les S = 2 ensembles de N > 3 axes de projection prédéterminés;
des unités de formation d'histogramme destinées à former des histogrammes pour des éléments d'image du signal de sortie dans les classes sélectionnées par le dispositif de classification (25b) dans chaque domaine sélectionné par le signal de validation projeté sur des ensembles d'axes de projection prédéterminés; et
un circuit de commande destiné à commander le dispositif de classification, l'unité de combinaison linéaire, l'unité de rotation, et l'unité de formation d'histogramme afin d'identifier l'objet de telle sorte que lesdits dispositifs de classification, lesdites unités de combinaison, et lesdites unités de formation d'histogramme réalisent en parallèle S x N opérations élémentaires pour chacun desdits axes de projection prédéterminés.

**34.** Dispositif selon la revendication 33, dans lequel l'unité de rotation réalise une transformée de Hough.

**35.** Dispositif selon la revendication 33 ou 34, dans lequel les unités de rotation permettent la rotation d'un premier ensemble d'axes prédéterminés et d'un deuxième ensemble d'axes prédéterminés, et dans lequel les unités de formation d'histogramme sont capables de former un premier ensemble d'histogrammes projetées sur le premier ensemble d'axe prédéterminé, et
de former un deuxième ensemble d'histogrammes projetés sur le deuxième ensemble d'axe prédéterminé.

**36.** Dispositif selon l'une quelconque des revendications 33 à 35, **caractérisé en ce que** l'objet est dans une zone d'une image, et le dispositif comporte en outre une unité de sélection de zone destinée à sélectionner une zone de l'image, les unités de formation d'histogramme formant des histogrammes pour des éléments d'image du signal d'entrée dans la zone sélectionnée de l'image, et le circuit de commande commande en outre l'unité de sélection de zone afin de permettre la sélection des objets dans une zone souhaitée d'une image.

**37.** Dispositif selon l'une quelconque des revendications 33 à 36, **caractérisé en ce que** l'objet est dans une zone de l'image, et le dispositif comporte en outre une unité de masque destinée à masquer une zone de l'image afin d'empêcher une considération des éléments d'image dans la zone masquée, et le circuit de commande commande en outre l'unité de masque afin d'identifier l'objet.

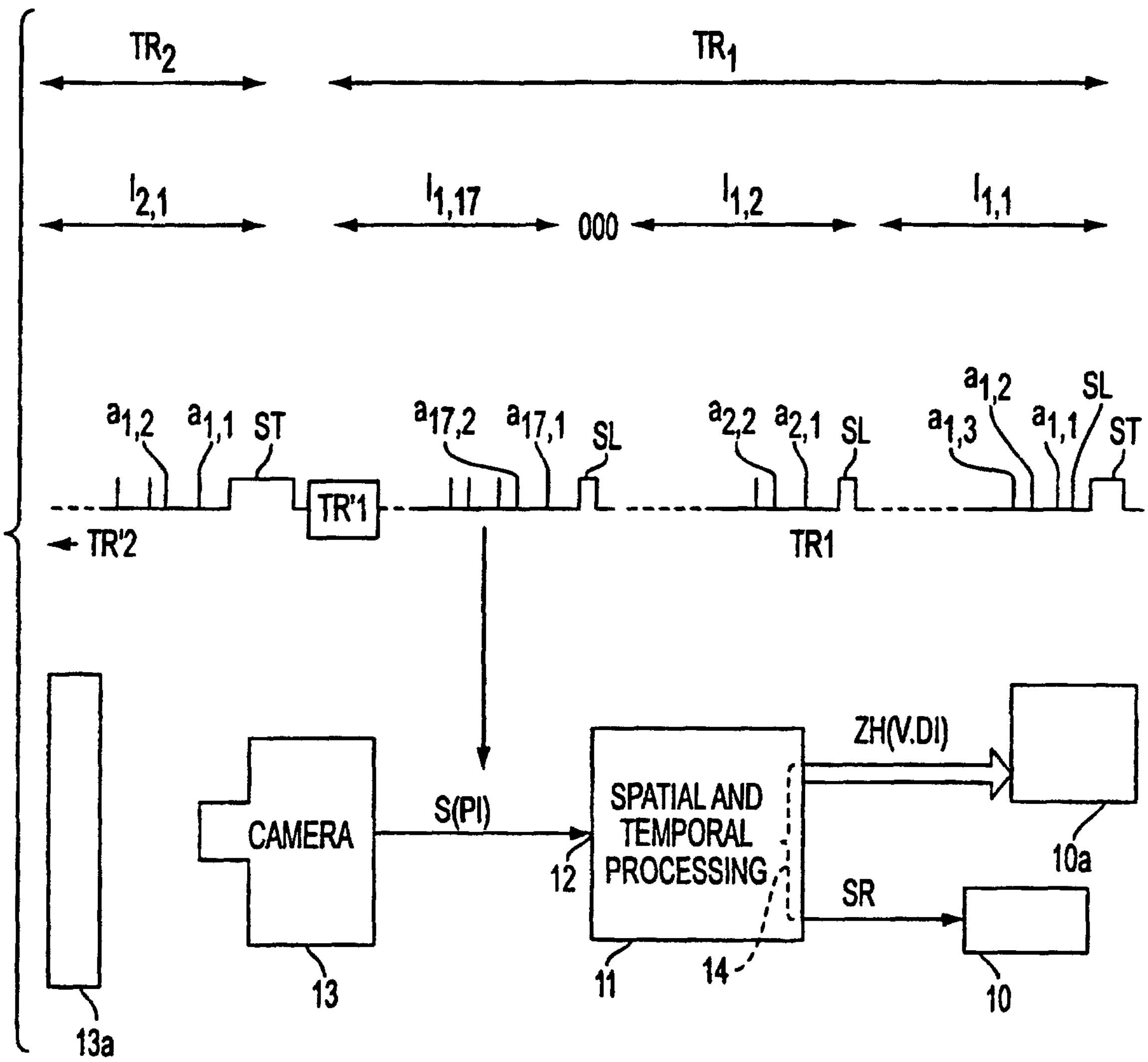
TR2
TR1
I2,1
I1,17
000
I1,2
I1,1
a1,2
a1,1
ST
TR'1
a17,2
a17,1
SL
a2,2
a2,1
SL
a1,3
a1,2
a1,1
SL
ST
TR'2
TR1
CAMERA
S(PI)
SPATIAL AND TEMPORAL PROCESSING
ZH(V.DI)
SR
12
13
13a
11
14
10a
10

FIG. 1

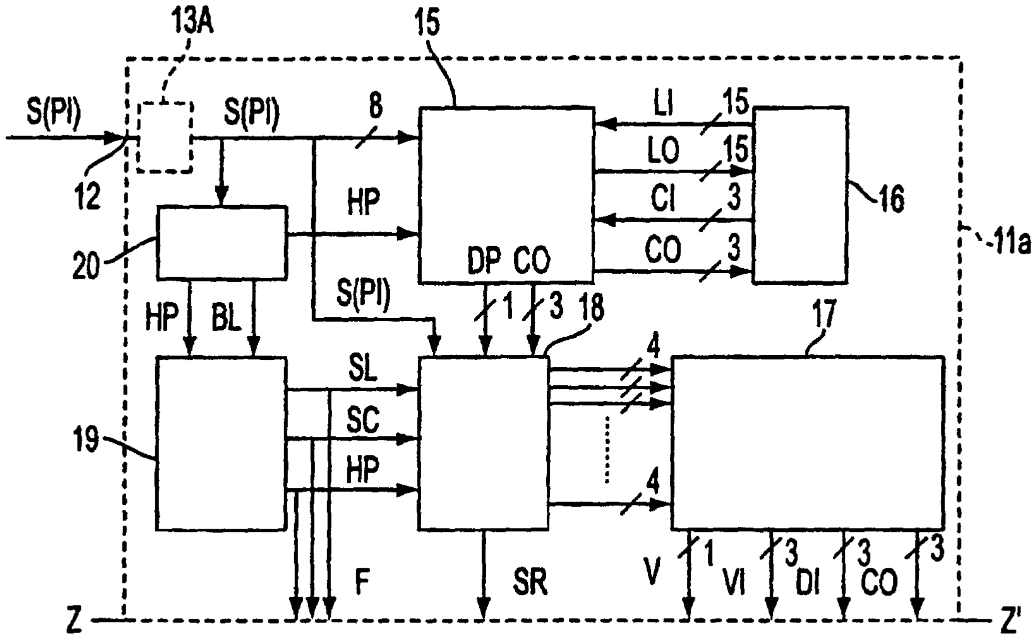
13A
15
S(PI)
S(PI)
8
LI
15
LO
15
CI
3
CO
3
12
HP
16
11a
20
DP CO
S(PI)
1
3
18
17
HP
BL
4
SL
SC
19
HP
4
V
1
VI
3
DI
3
CO
3
F
SR
Z
Z'

FIG. 2

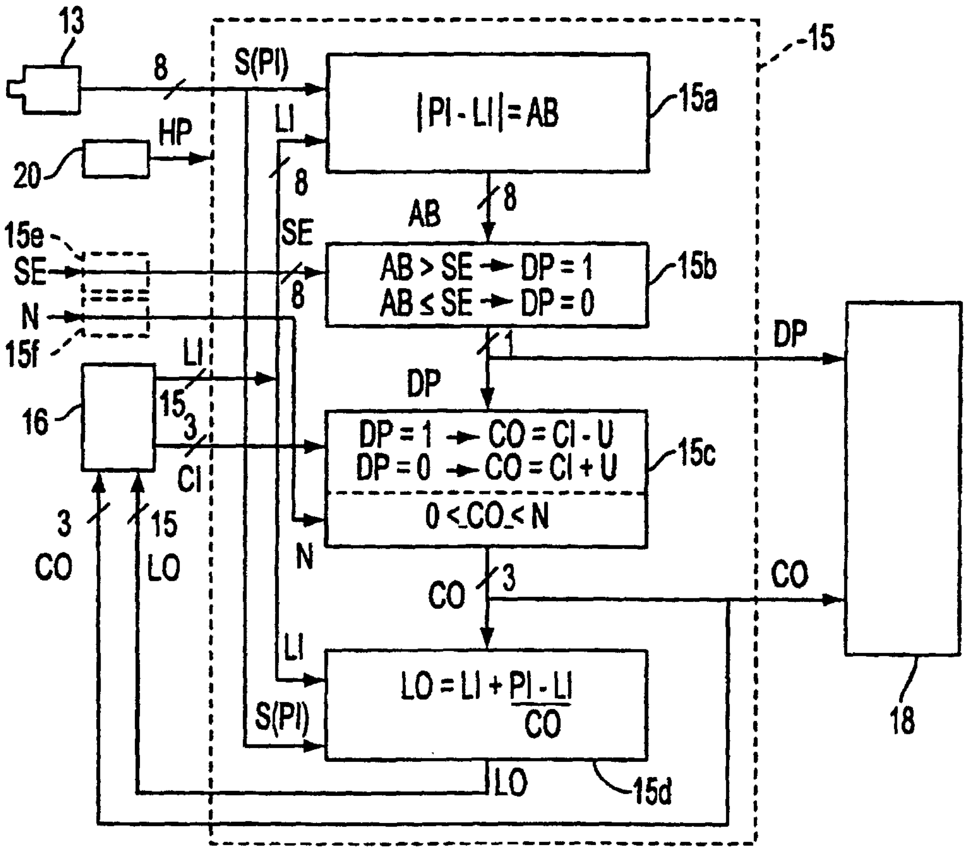
13
15
8
S(PI)
|PI - LI| = AB
15a
HP
20
LI
8
AB
8
15e
SE
SE
AB > SE → DP = 1
AB ≤ SE → DP = 0
15b
N
8
15f
1
DP
LI
DP
15
16
3
DP = 1 → CO = CI - U
DP = 0 → CO = CI + U
15c
CI
0 < CO < N
3
15
CO
LO
N
CO
3
CO
LI
LO = LI + (PI - LI) / CO
S(PI)
18
LO
15d

FIG. 3

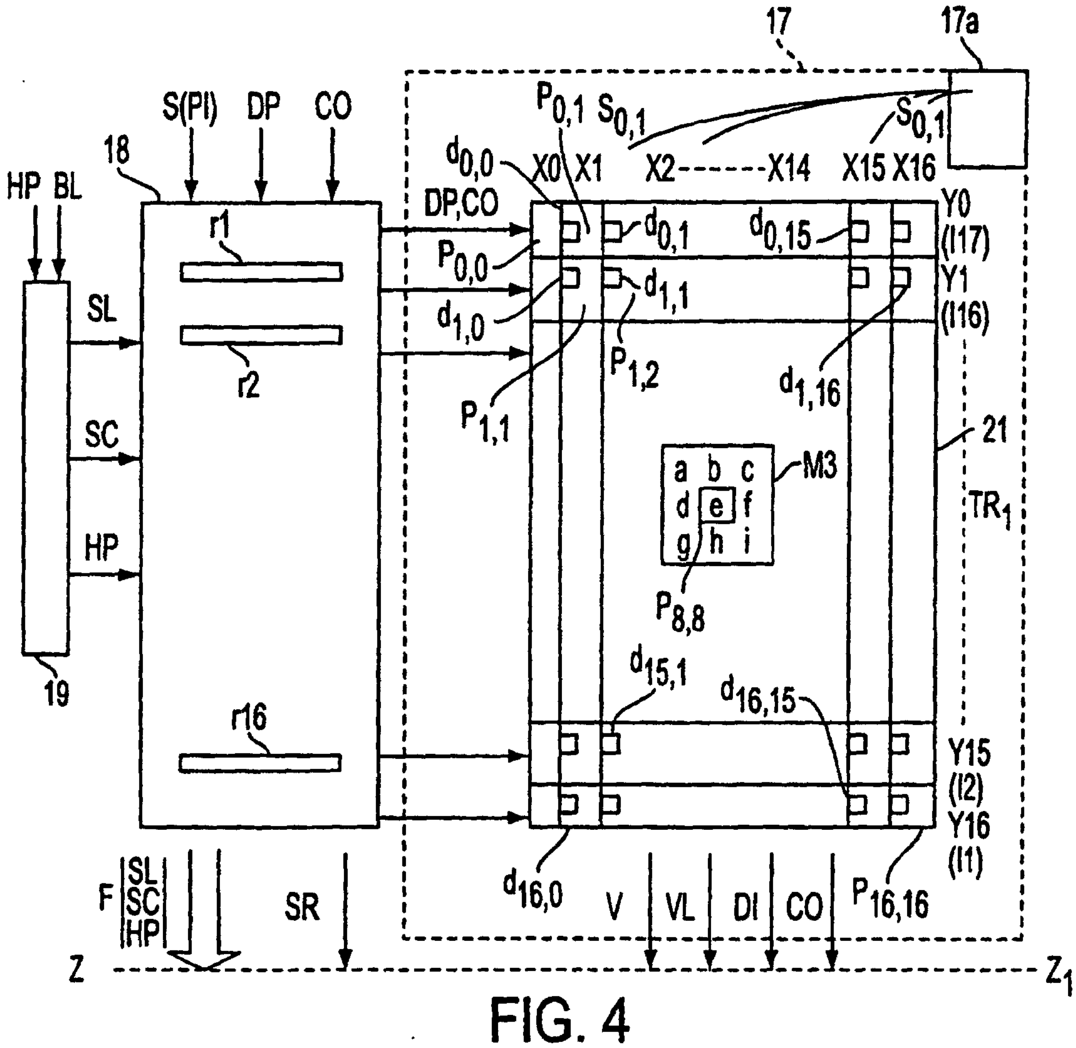


FIG. 4

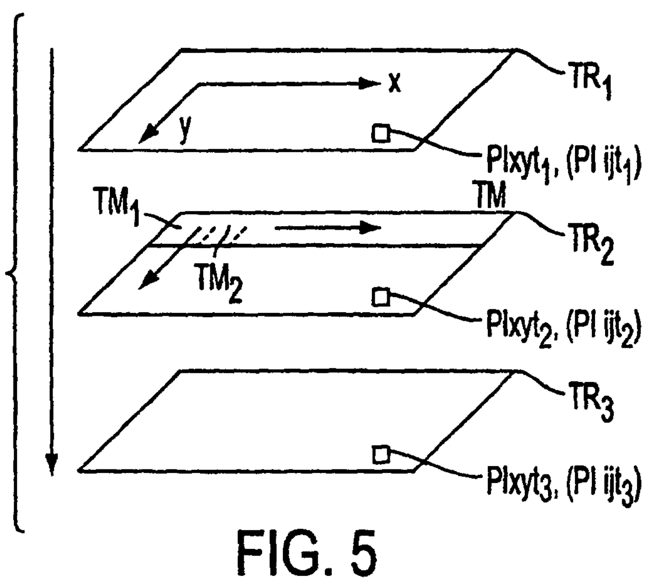


FIG. 5

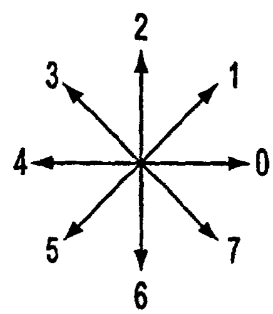


FIG. 6

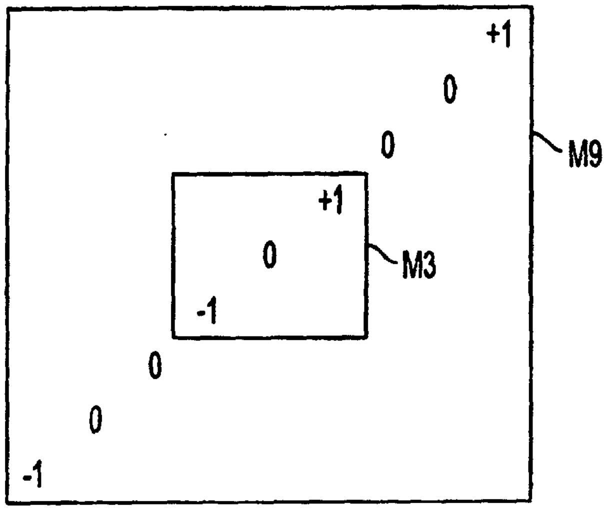


FIG. 7

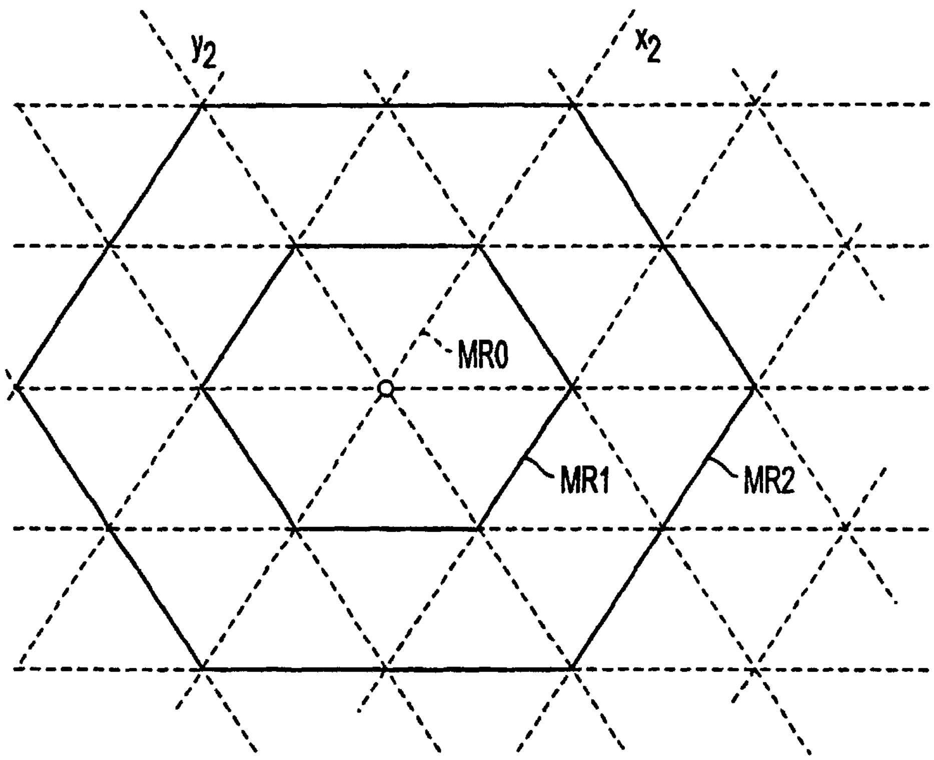


FIG. 8

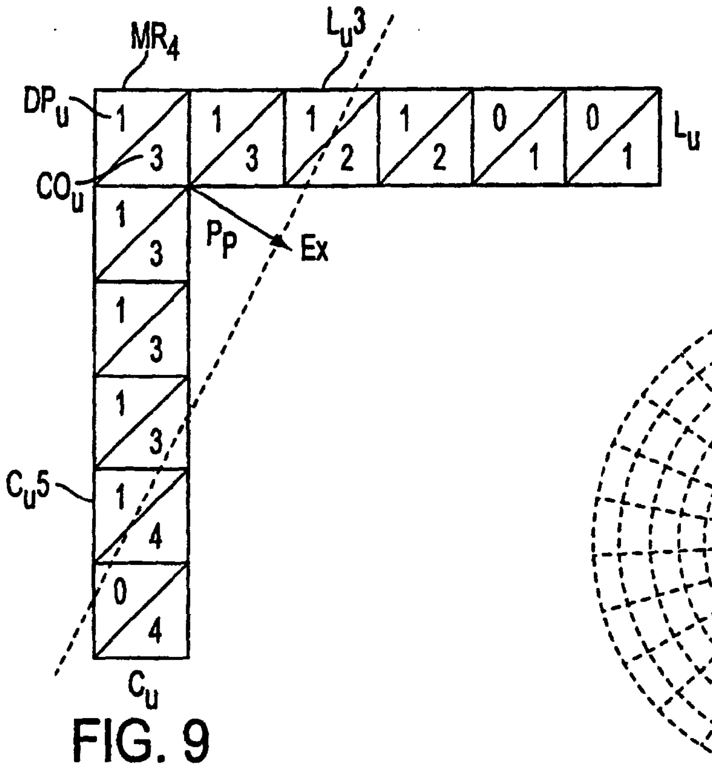


FIG. 9

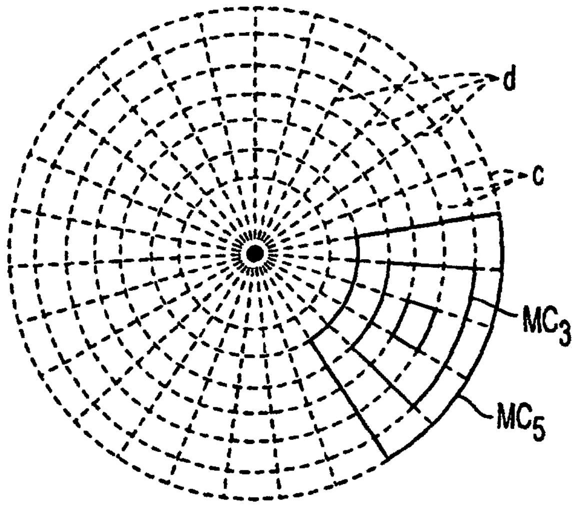


FIG. 10

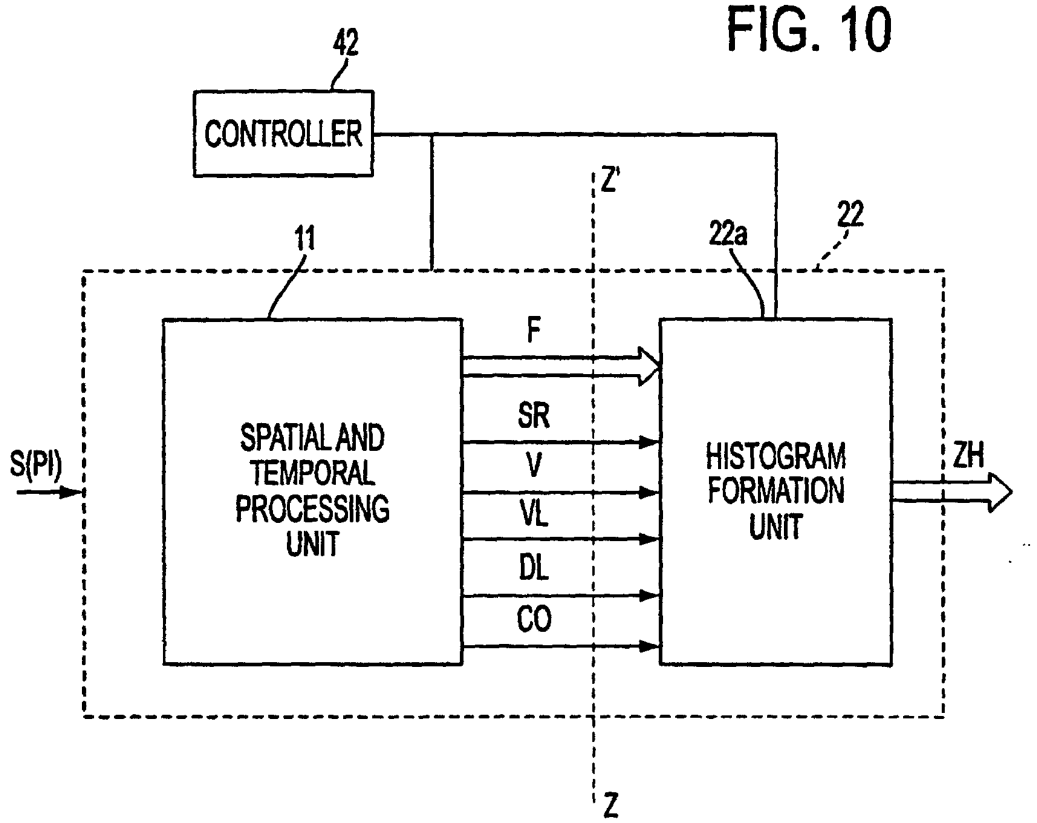


FIG. 11

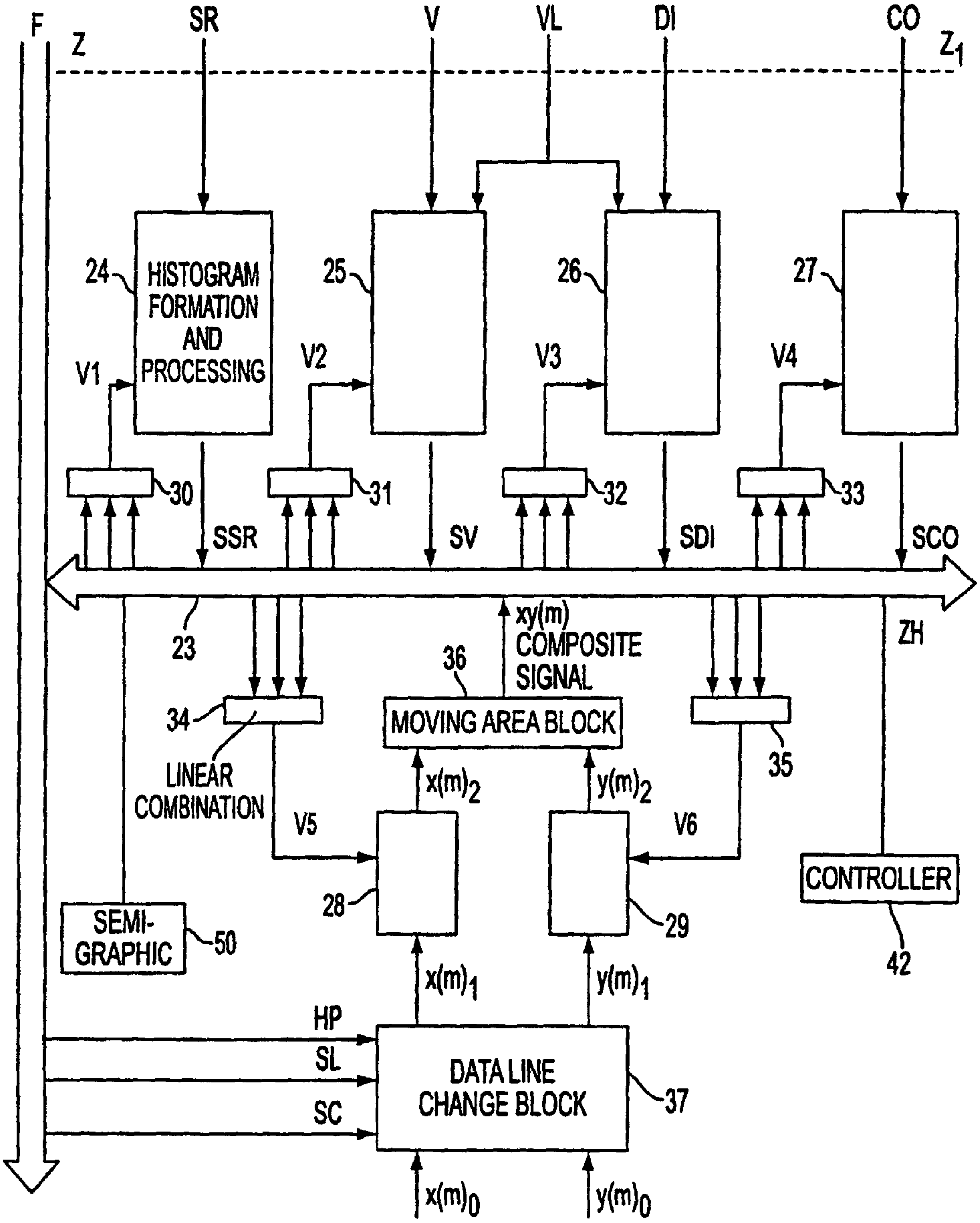
F
Z
SR
V
VL
DI
CO
$Z_1$
24
HISTOGRAM FORMATION AND PROCESSING
25
26
27
V1
V2
V3
V4
30
31
32
33
SSR
SV
SDI
SCO
23
xy(m) COMPOSITE SIGNAL
ZH
36
34
MOVING AREA BLOCK
35
LINEAR COMBINATION
$x(m)_2$
$y(m)_2$
V5
V6
CONTROLLER
28
29
SEMI-GRAPHIC
50
42
$x(m)_1$
$y(m)_1$
HP
SL
SC
DATA LINE CHANGE BLOCK
37
$x(m)_0$
$y(m)_0$

FIG. 12

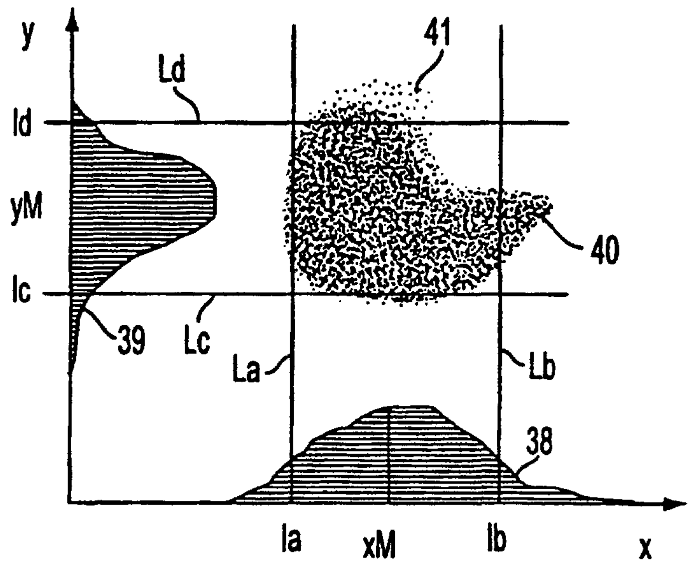


FIG. 13

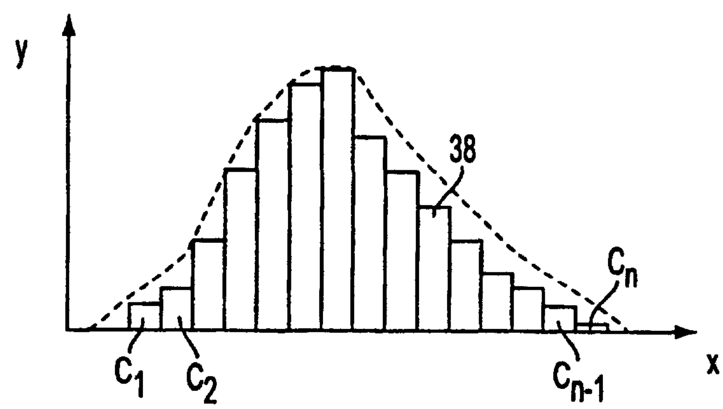


FIG. 16

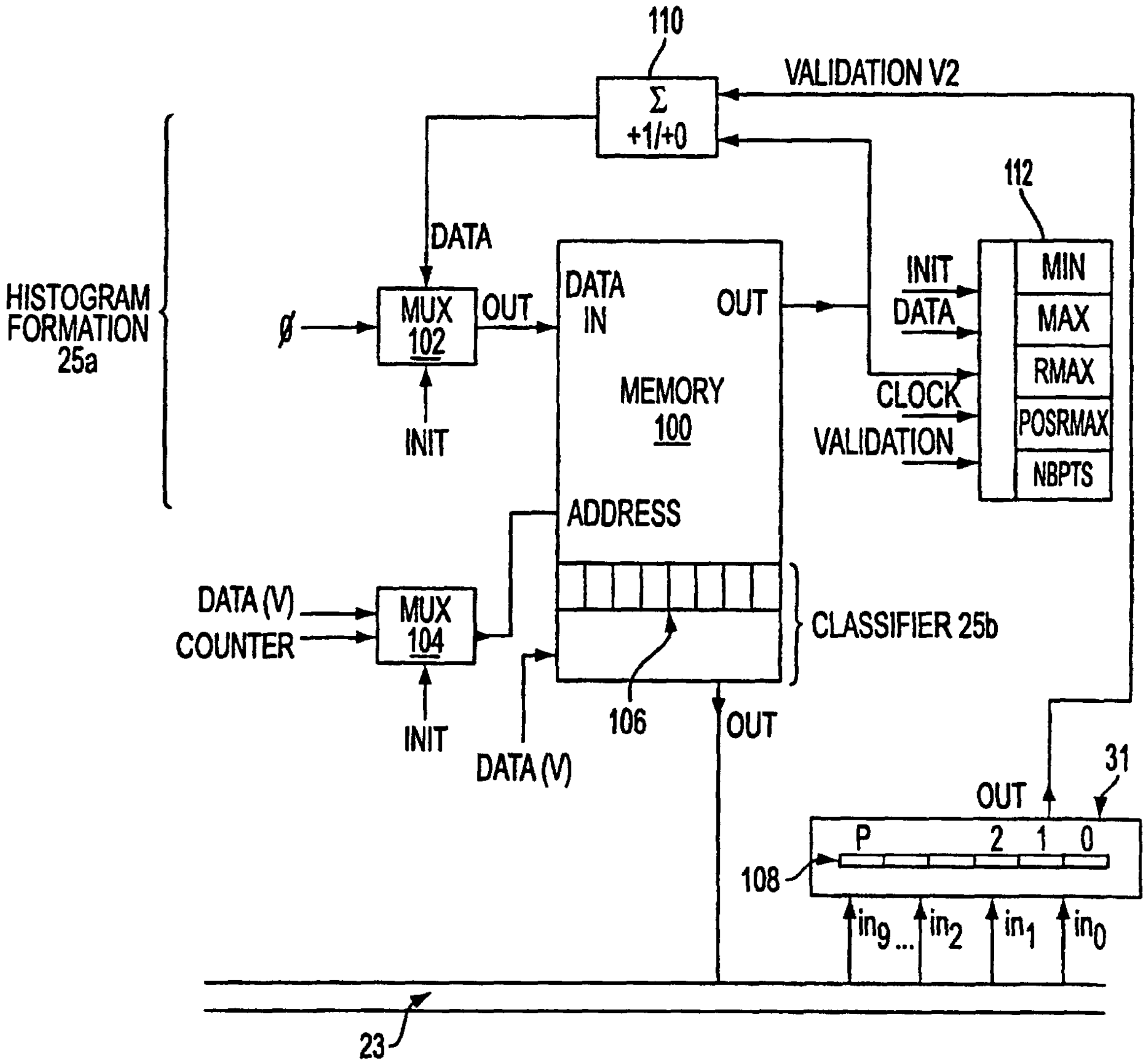
110
VALIDATION V2
Σ
+1/+0
112
HISTOGRAM
FORMATION
25a
DATA
MUX
102
OUT
INIT
Ø
DATA
IN
OUT
MEMORY
100
INIT
DATA
CLOCK
VALIDATION
MIN
MAX
RMAX
POSRMAX
NBPTS
ADDRESS
DATA (V)
COUNTER
MUX
104
INIT
CLASSIFIER 25b
106
OUT
DATA (V)
31
OUT
P
2
1
0
108
in9 ...
in2
in1
in0
23

FIG. 14

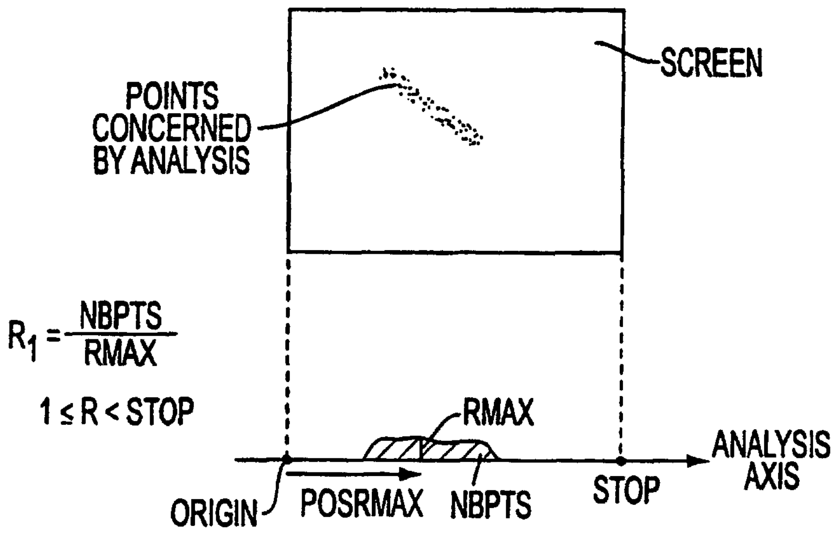


FIG. 15A

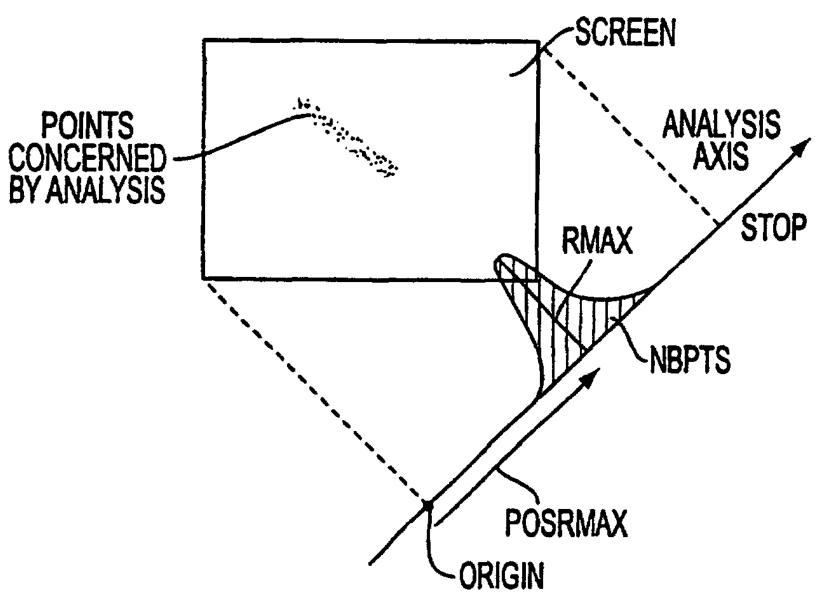


FIG. 15B

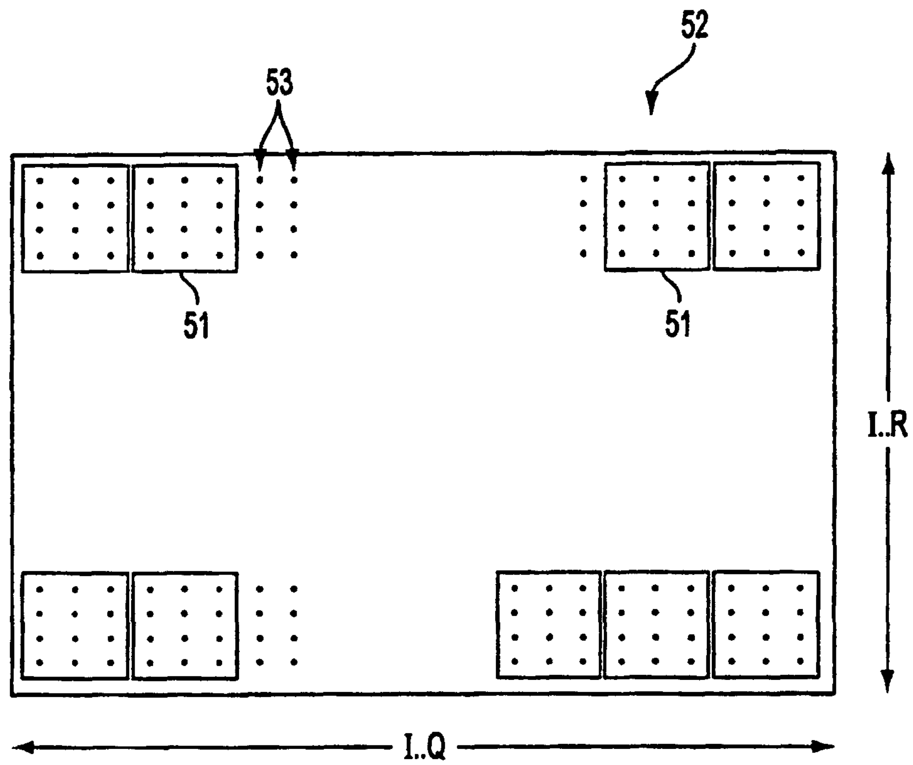
52
53
51
51
I..R
I..Q

FIG. 17

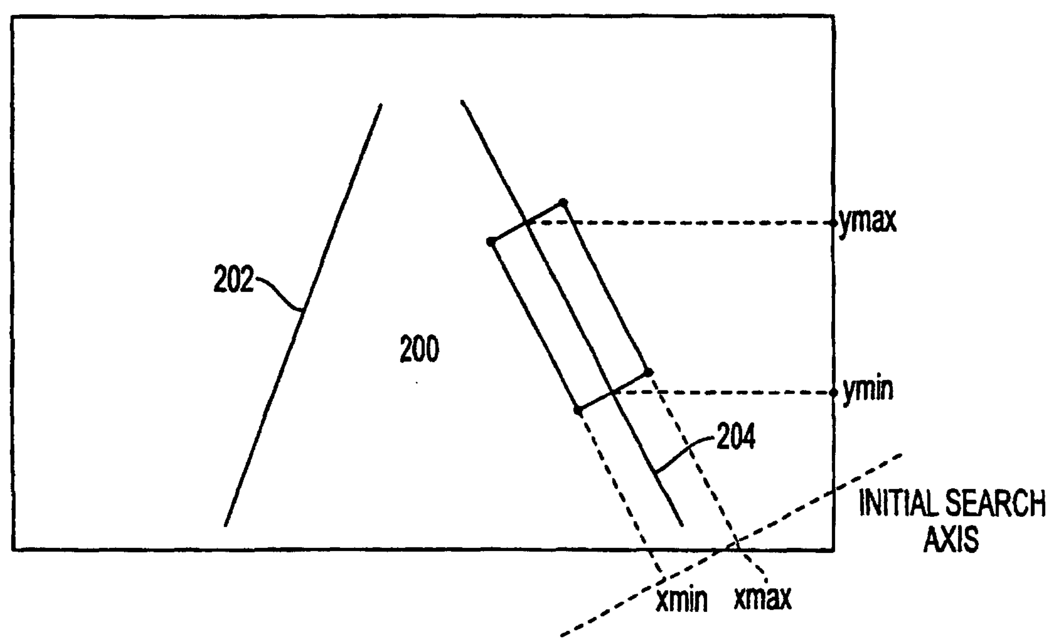
ymax
202
200
ymin
204
INITIAL SEARCH
AXIS
xmin
xmax

FIG. 18

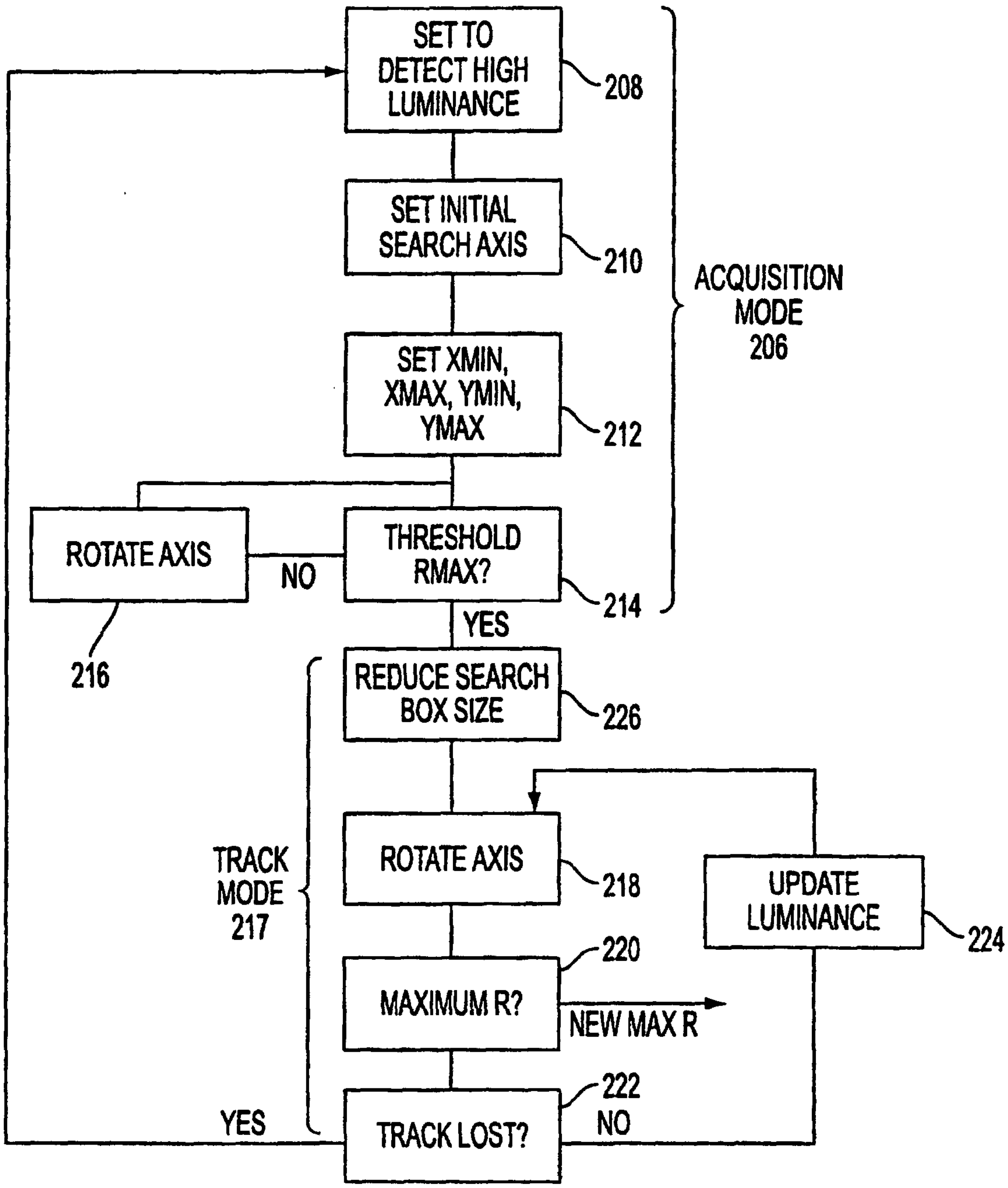
SET TO DETECT HIGH LUMINANCE
208
SET INITIAL SEARCH AXIS
210
SET XMIN, XMAX, YMIN, YMAX
212
ACQUISITION MODE 206
ROTATE AXIS
NO
THRESHOLD RMAX?
214
216
YES
REDUCE SEARCH BOX SIZE
226
TRACK MODE 217
ROTATE AXIS
218
UPDATE LUMINANCE
224
220
MAXIMUM R?
NEW MAX R
222
YES
TRACK LOST?
NO

FIG.19

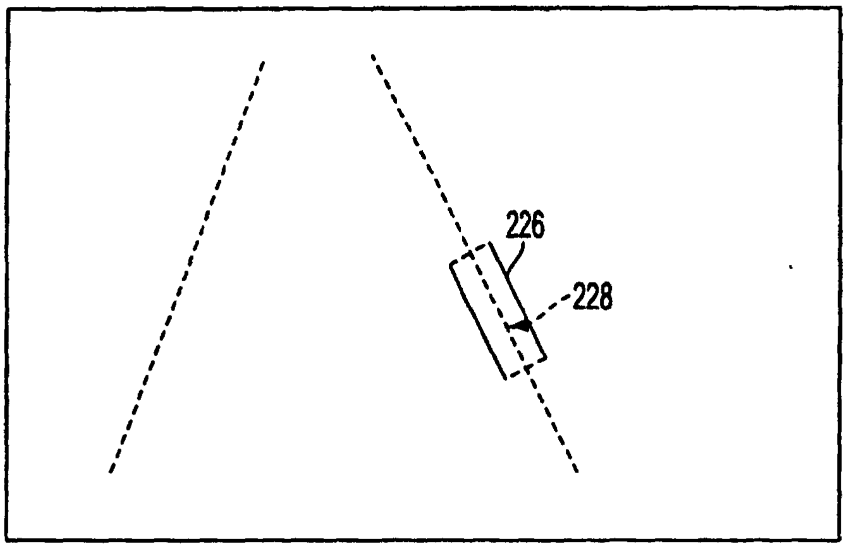


FIG. 20

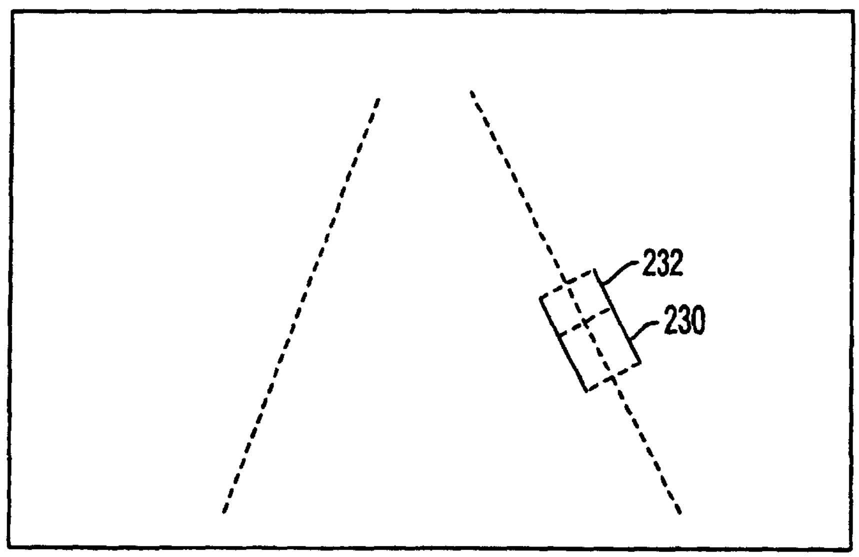


FIG. 21A

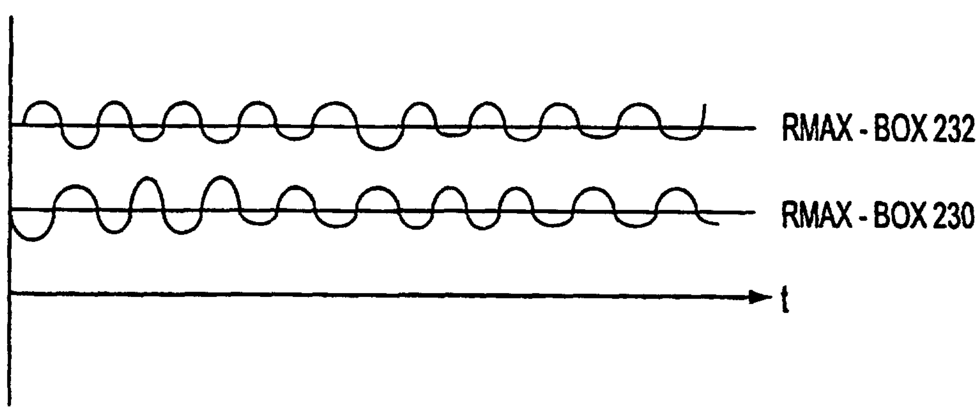


FIG. 21B

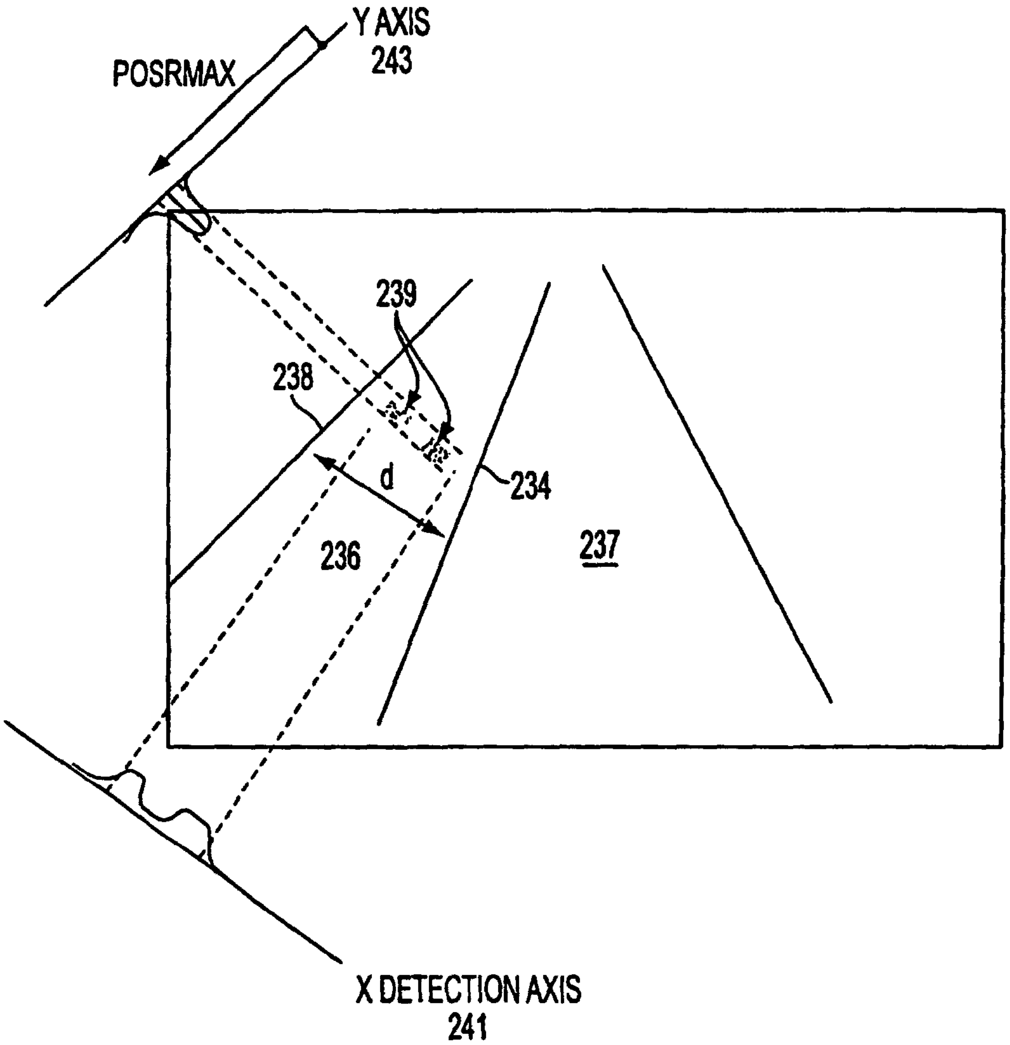


FIG. 22

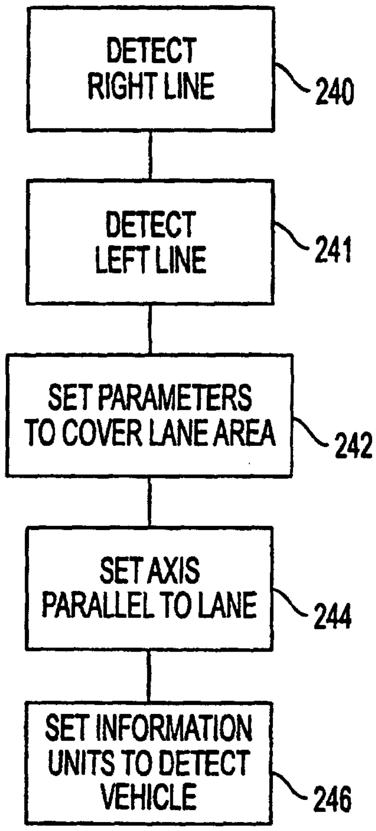


FIG. 23

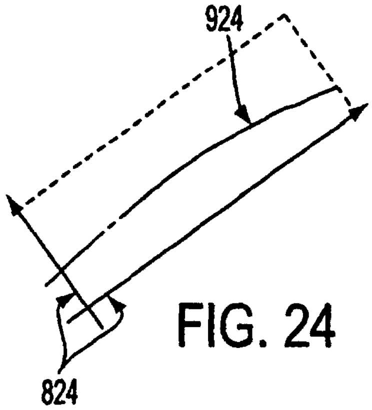


FIG. 24

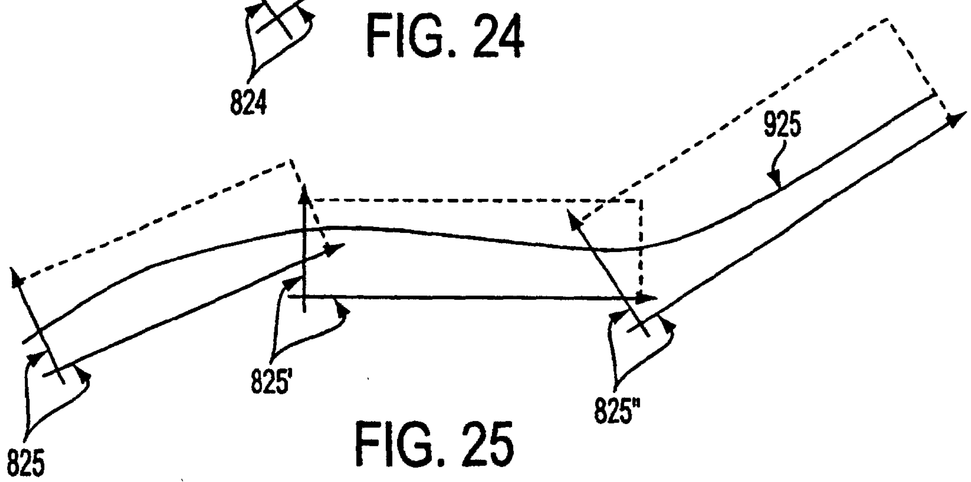


FIG. 25